(19) Europäisches Patentamt
European Patent Office
Office européen des brevets

(11) **EP 4 775 465 A1**

(12) **EUROPEAN PATENT APPLICATION**
published in accordance with Art. 153(4) EPC

(43) Date of publication:
**15.07.2026 Bulletin 2026/29**

(21) Application number: **24862508.9**

(22) Date of filing: **08.08.2024**

(51) International Patent Classification (IPC):
*B60W 30/10* (2006.01)    *B60W 30/02* (2012.01)
*B60W 30/08* (2012.01)    *B60W 30/095* (2012.01)
*B62D 6/00* (2006.01)    *G08G 1/16* (2006.01)

(52) Cooperative Patent Classification (CPC):
**B60W 30/02; B60W 30/08; B60W 30/095;**
**B60W 30/10; B62D 6/00; G08G 1/16**

(86) International application number:
**PCT/JP2024/028372**

(87) International publication number:
**WO 2025/052854 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.09.2023 JP 2023146071**

(71) Applicant: **Astemo, Ltd.**
**Chiyoda-ku,**
**Tokyo 1000004 (JP)**

(72) Inventors:
• **SUGAWARA, Hiroki**
  **Hitachinaka-shi, Ibaraki 312-8503 (JP)**
• **UENO, Kentaro**
  **Hitachinaka-shi, Ibaraki 312-8503 (JP)**
• **IBA, Tatsuya**
  **Hitachinaka-shi, Ibaraki 312-8503 (JP)**

(74) Representative: **Hoefer & Partner Patentanwälte
mbB
Pilgersheimer Straße 20
81543 München (DE)**

(54) **VEHICLE CONTROL DEVICE**

(57)    According to a vehicle control device of the present invention, in one aspect thereof, a reference trajectory is generated on the basis of a travelable area ahead of a vehicle and a predetermined constraint in travel of the vehicle through the travelable area, an assist amount for causing travel of the vehicle according to an operation by a driver to approach reference information acquired on the basis of the reference trajectory is determined on the basis of a physical quantity related to the motion of the vehicle, a physical quantity related to a driving operation of the vehicle by the driver, and the reference information, and the assist amount is output to a travel actuator of the vehicle. Thereby, the comfort and safety of a vehicle when a driver performs driving operations of the vehicle can be enhanced.

FIG. 2

**Description**

TECHNICAL FIELD

The present invention relates to vehicle control devices.

BACKGROUND ART

A driver assistance device in Patent Document 1 includes: a path target acquiring means for acquiring a target requested by a driver in setting a travel path; a path selecting means for selecting a travel path depending on the acquired target; a path information acquiring means for acquiring path information about the selected path; a target trajectory calculating means for calculating a target trajectory of the vehicle in the selected path; and a changeable region calculating means for determining a changeable region which is an area within which the trajectory calculated on the basis of the path information can be changed.

REFERENCE DOCUMENT LIST

PATENT DOCUMENT

Patent Document 1: WO 2011/080830

SUMMARY OF THE INVENTION

PROBLEM TO BE SOLVED BY THE INVENTION

In addition, in a case in which a driver performs a driving operation of a vehicle, if the skill level of the driver is low, for example, the driver cannot take an appropriate course on a mountain road with successive curves, resulting in a large lateral acceleration due to abrupt turning or making it difficult to stably maintain the lane, in some cases.
The present invention has been made in view of the current circumstances, and an object thereof is to provide a vehicle control device that can enhance the comfort and safety of a vehicle when a driver performs driving operations of the vehicle.

MEANS FOR SOLVING THE PROBLEM

A vehicle control device according to one aspect of the present invention includes: a vehicle motion amount acquiring section that acquires a physical quantity related to motion of a vehicle; a driving operation amount acquiring section that acquires a physical quantity related to a driving operation of the vehicle by a driver; a trajectory generating section that generates a reference trajectory on a basis of a travelable area ahead of the vehicle and a predetermined constraint in travel of the vehicle through the travelable area; and an assist section that determines an assist amount for causing travel of the vehicle according to an operation by the driver to approach reference information acquired on a basis of the reference trajectory, on a basis of the physical quantity related to the motion of the vehicle, the physical quantity related to the driving operation of the vehicle, and the reference information and outputs the assist amount to a travel actuator of the vehicle.

EFFECTS OF THE INVENTION

The present invention can enhance the comfort and safety of a vehicle when a driver performs driving operations for the vehicle.

BRIEF DESCRIPTION OF THE DRAWINGS

FIG. 1 is a block diagram illustrating a vehicle control system.

FIG. 2 is a block diagram illustrating an assist control function of a vehicle control device.

FIG. 3 is a block diagram illustrating the vehicle control device having a function of predicting a travel trajectory.

FIG. 4 is a drawing illustrating an example of a travelable area and a reference trajectory on a curved road.

FIG. 5 is a drawing illustrating a trajectory represented by a difference equation expression.

FIG. 6 is a drawing illustrating the nearest point on the reference trajectory.

FIG. 7 is a drawing illustrating a method of determining a preview point.

FIG. 8 is a flowchart illustrating a first steering-angle assist pattern.

FIG. 9 is a drawing illustrating changes in actual steering angle and the like in the first steering-angle assist pattern.

FIG. 10 is a drawing illustrating differences in steering-angle assist direction depending on the position of the reference trajectory.

FIG. 11 is a drawing illustrating differences in steering-angle assist direction depending on the position of the reference trajectory.

FIG. 12 is a drawing illustrating changes in trajectory resulting from assist control based on a predicted travel trajectory.

FIG. 13 is a drawing illustrating changes in lateral acceleration resulting from assist control based on the predicted travel trajectory.

FIG. 14 is a drawing illustrating the travel trajectory during a lane change.

FIG. 15 is a drawing illustrating lateral acceleration generated during a lane change.

FIG. 16 is a drawing illustrating the reference trajectory, the predicted travel trajectory, and the travel trajectory resulting from assist control.

FIG. 17 is a flowchart illustrating a second steering-angle assist pattern.

FIG. 18 is a drawing illustrating changes in actual steering angle and the like in the second steering-angle assist pattern.

FIG. 19 is a drawing illustrating changes in steering assist force and the like in the second steering-angle assist pattern.

FIG. 20 is a flowchart illustrating a third steering-angle assist pattern.

FIG. 21 is a drawing illustrating changes in curvature, steering angle, and the like in the third steering-angle assist pattern.

FIG. 22 is a drawing illustrating a trajectory according to the third steering-angle assist pattern.

FIG. 23 is a drawing illustrating changes in steering angle according to the third steering-angle assist pattern.

FIG. 24 is a flowchart illustrating a fourth steering-angle assist pattern.

FIG. 25 is a drawing illustrating trajectories on the outer side and inner side of the reference trajectory.

FIG. 26 is a drawing illustrating the steering angle during traveling on the outer side of the reference trajectory.

FIG. 27 is a drawing illustrating the steering angle during traveling on the inner side of the reference trajectory.

FIG. 28 is a flowchart illustrating a fifth steering-angle assist pattern.

FIG. 29 is a flowchart illustrating assist control depending on the trajectory direction.

FIG. 30 is a flowchart illustrating assist control depending on whether or not there is an obstacle.

FIG. 31 is a drawing for explaining assist control in a driver-priority mode.

FIG. 32 is a drawing for explaining assist control in a safety-priority mode.

FIG. 33 is a flowchart illustrating assist control depending on the grip force.

FIG. 34 is a drawing illustrating the reference trajectory to avoid an obstacle on a curved road.

FIG. 35 is a drawing for explaining assist control to inhibit saturation of the tire force.

FIG. 36 is a flowchart illustrating assist control to cause the vehicle to travel on the inner side of the travelable area.

FIG. 37 is a drawing illustrating assist control to cause the vehicle to travel on the inner side of the travelable area.

FIG. 38 is a flowchart illustrating a first target-vehicle-speed creation pattern.

FIG. 39 is a drawing illustrating an example of the reference trajectory on a curved road.

FIG. 40 is a drawing illustrating an example of a steering angle and a target vehicle speed corresponding to the curvature of the reference trajectory.

FIG. 41 is a drawing illustrating differences in travel trajectory on a curved road.

FIG. 42 is a time chart illustrating differences in actual steering angle, vehicle speed, and lateral acceleration on a curved road.

FIG. 43 is a drawing illustrating differences in travel trajectory at a curve exit.

FIG. 44 is a time chart illustrating differences in lateral acceleration and vehicle speed at a curve exit.

FIG. 45 is a flowchart illustrating a second target-vehicle-speed creation pattern.

FIG. 46 is a time chart illustrating differences in deceleration amount before a curve.

FIG. 47 is a flowchart illustrating a first brake assist and drive assist pattern

FIG. 48 is a flowchart illustrating a third brake assist and drive assist pattern.

FIG. 49 is a flowchart illustrating a fourth brake assist and drive assist pattern.

FIG. 50 is a flowchart illustrating a fifth brake assist and drive assist pattern.

FIG. 51 is a flowchart illustrating assist control to notify a driver.

FIG. 52 is a flowchart illustrating assist control to control steering reaction force.

FIG. 53 is a drawing for explaining the operation of assist control to control the steering reaction force.

MODE FOR CARRYING OUT THE INVENTION

Hereinbelow, an embodiment of a vehicle control device according to the present invention is explained on the basis of the drawings.

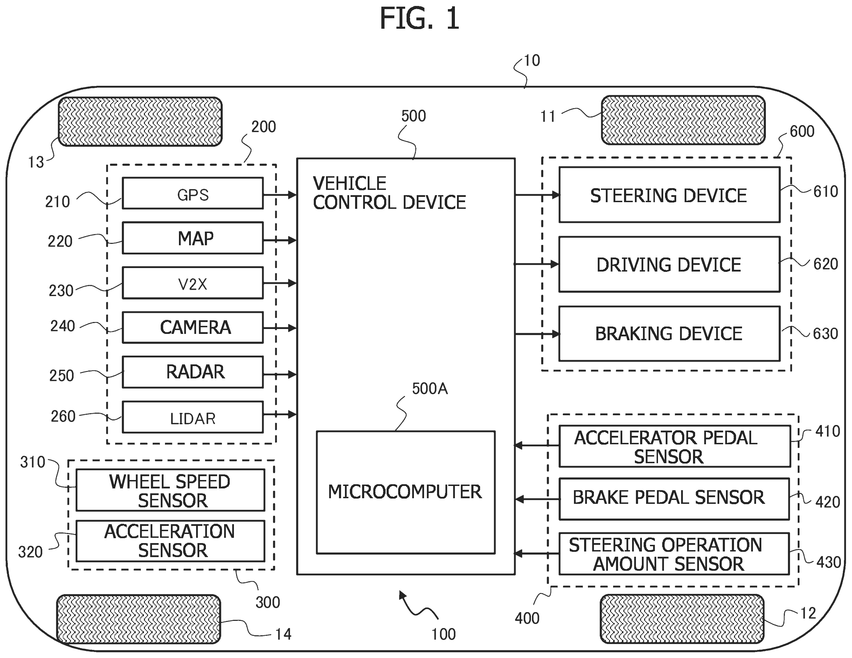

FIG. 1 is a block diagram illustrating a vehicle traveling system 100 mounted on a vehicle 10.

Vehicle 10 is a four-wheel automobile including a pair of left and right front wheels 11 and 12 and a pair of left and right rear wheels 13 and 14.

Vehicle traveling system 100 has an external-environment recognizing section 200, a vehicle motion amount detecting section 300, a driving operation amount detecting section 400, a vehicle control device 500, and a travel actuator 600.

Here, vehicle traveling system 100 is a system that electronically controls travel actuator 600 for assisting driving operations by the driver.

External-environment recognizing section 200 is a device for recognizing external-environment information about vehicle 10, that is, for sensing the surrounding situation of vehicle 10.

For example, external-environment recognizing section 200 includes a GPS (Global Positioning System) receiving section 210, a map database 220, a road-to-vehicle communication device 230, a camera 240, a radar 250, a LiDAR (Light Detection and Ranging, Laser Imaging Detection and Ranging) 260, and the like.

Note that GPS receiving section 210 and map database 220 are included in a car navigation system.

Vehicle motion amount detecting section 300 is a device for detecting physical quantities related to the motion of vehicle 10 and includes a wheel speed sensor 310, an acceleration sensor 320, and the like.

Wheel speed sensor 310 is a sensor that detects the rotational speed of each of wheels 11 to 14 of vehicle 10, and results of the detection by wheel speed sensor 310 are used for estimation of the speed of vehicle 10.

In addition, acceleration sensor 320 detects the longitudinal acceleration, lateral acceleration, vertical acceleration, yaw rate, pitch rate, roll rate, lateral jerk, and the like of vehicle 10.

Driving operation amount detecting section 400 is a device for detecting physical quantities related to driving operations of vehicle 10 by the driver, specifically an accelerator operation amount, a brake operation amount, and a steering operation amount.

Specifically, driving operation amount detecting section 400 has: an accelerator pedal sensor 410 that detects the accelerator operation amount, which is the operation amount of the accelerator pedal (not shown); a brake pedal sensor 420 that detects the brake operation amount, which is the operation amount of the brake pedal (not shown); and a steering operation amount sensor 430 that detects the steering operation amount (i.e., the steering operation amount), which is the operation amount of the steering wheel (not shown), which is a steering operation input member.

Travel actuator 600 is an actuator for causing vehicle 10 to travel and has a steering device 610, a driving device 620, and a braking device 630.

Steering device 610 is a steer-by-wire system (SBW system) that steers the steered road wheels (front wheels 11 and 12) of vehicle 10 that are mechanically disconnected from the steering wheel.

Steering device 610, which is the steer-by-wire system, includes a road wheel actuator that applies steering force to the steered road wheels and a steering reaction force actuator that applies the steering reaction force to the steering wheel.

Then, the road wheel actuator is electronically controlled depending on a signal representing a steering-wheel operation amount to control the steering angle of the steered road wheels.

Note that steering device 610 is not limited to the steer-by-wire system.

For example, steering device 610 may be an electric power steering device (EPS) in which the steering wheel and the steered road wheels (specifically, front wheels 11 and 12) of vehicle 10 are coupled mechanically, and an electric motor (hereinbelow, also referred to as a power steering motor) that generates steering assist force to assist the motion of a rack bar or a pinion gear coupled to the steering wheel is included.

Driving device 620 is a device that has an internal combustion engine, a motor, and the like and electronically controls the drive force applied to at least either front wheels 11 and 12 or rear wheels 13 and 14 depending on a signal representing the accelerator operation amount.

Braking device 630 is a device that has a hydraulic brake capable of control to increase or decrease supplied hydraulic pressure, an electric caliper, a regenerative driven motor, or the like and electronically controls the brake force applied to wheels 11 to 14 depending on a signal representing the brake operation amount.

Vehicle control device 500 is an electronic control unit including a microcomputer 500A that performs computations on the basis of acquired information and outputs computation results, and microcomputer 500A functions as a driving assist controller that assists driving operations of vehicle 10 by the driver.

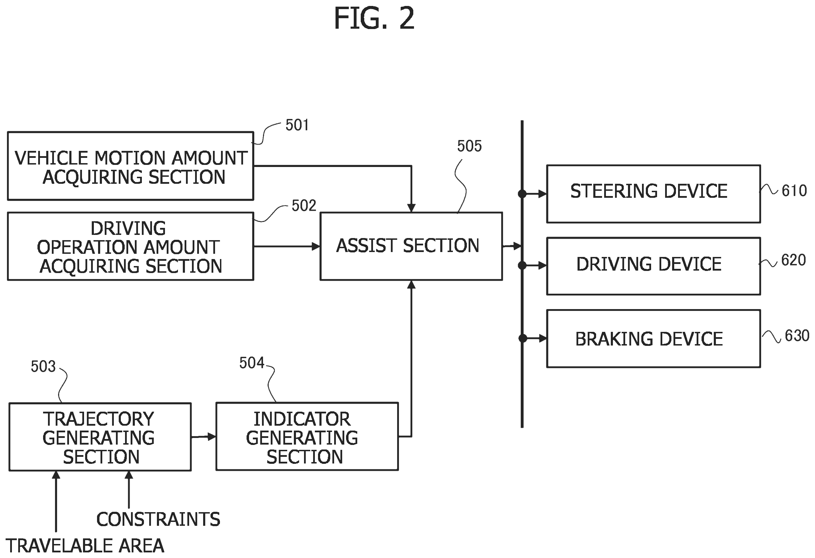

FIG. 2 is a block diagram illustrating assist control functions of vehicle control device 500 (microcomputer 500A).

Vehicle control device 500 has individual functional sections, which are a vehicle motion amount acquiring section 501, a driving operation amount acquiring section 502, a trajectory generating section 503, an indicator generating section 504, and an assist section *505*.

Vehicle motion amount acquiring section 501 acquires physical quantities related to the motion of vehicle 10.

Vehicle motion amount acquiring section 501 acquires physical quantities related to the motion of vehicle 10 such as vehicle speed, longitudinal acceleration, lateral acceleration, vertical acceleration, yaw rate, pitch rate, roll rate, and lateral jerk from vehicle motion amount detecting section 300, specifically from wheel speed sensor 310 and acceleration sensor 320.

Driving operation amount acquiring section 502 acquires physical quantities related to driving operations of vehicle 10 by the driver.

Driving operation amount acquiring section 502 acquires physical quantities related to driving operations of vehicle 10 by the driver such as accelerator operation amount, brake operation amount, and steering operation amount from driving operation amount detecting section 400, specifically accelerator pedal sensor 410, brake pedal sensor 420, and steering operation amount sensor 430.

Trajectory generating section 503 generates a reference trajectory for assisting driving operations of vehicle 10 by the driver on the basis of a travelable area ahead of vehicle 10 and predetermined constraints in travel of vehicle 10 through the travelable area.

As explained in detail later, for example, the travelable area is set as a region ahead of vehicle 10 on a lane in which vehicle 10 is traveling, on the basis of recognition results about lane markers and the like.

Then, trajectory generating section 503 generates the reference trajectory passing through the travelable area using, as constraints, the path, speed, and vehicle behavior in travel of vehicle 10 through the travelable area and furthermore the road surface condition of the travelable area, the travel trajectory of a preceding vehicle, and the like and taking these constraints into account.

Indicator generating section 504 acquires information about the reference trajectory generated by trajectory generating section 503 and acquires, as reference information about assist control to assist driving operations of vehicle 10 by the driver, the position of the reference trajectory, the curvature of the reference trajectory, the derivative value of the curvature of the reference trajectory, a target speed based on the curvature of the reference trajectory, a target longitudinal acceleration, a target longitudinal jerk, and the like.

Assist section 505 determines assist amounts for causing travel of vehicle 10 according to operations by the driver to approach the reference information on the basis of the physical quantities related to the motion of vehicle 10 acquired by vehicle motion amount acquiring section 501, the physical quantities related to driving operations of vehicle 10 by the driver acquired by driving operation amount acquiring section 502, and the reference information acquired by indicator generating section 504 on the basis of the reference trajectory.

Then, assist section 505 outputs the assist amounts to steering device 610, driving device 620, and braking device 630 included in travel actuator 600 and assists steering operations, accelerator operations, and brake operations by the driver.

That is, assist section 505 determines a steering assist amount, a drive-force assist amount, and a brake-force assist amount and outputs these assist amounts to steering device 610, driving device 620, and braking device 630 to thereby assist operations by the driver to change the advancing direction of vehicle 10, accelerate vehicle 10, and decelerate vehicle 10.

Here, in addition to the basic functions illustrated in FIG. 1, vehicle control device 500 may have a function of predicting a future travel trajectory and driving state of vehicle 10 and generate the reference trajectory taking results of the prediction into account.

Furthermore, vehicle control device 500 may determine the assist amounts on the basis of a comparison between the reference information acquired on the basis of the reference trajectory and the predicted travel trajectory.

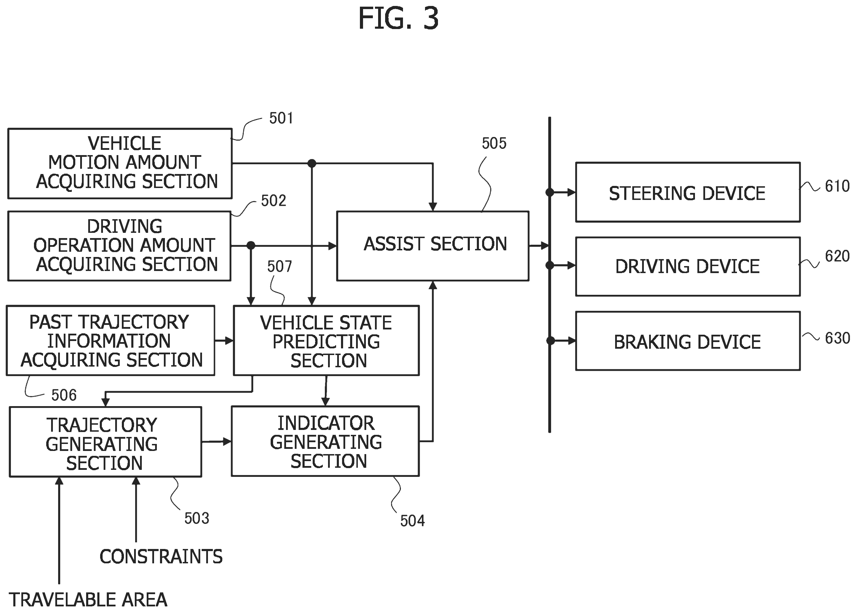

FIG. 3 is a block diagram illustrating vehicle control device 500 to which the function of predicting a future travel trajectory and driving state of vehicle 10 is added.

In FIG. 3, in addition to vehicle motion amount acquiring section 501, driving operation amount acquiring section 502, trajectory generating section 503, indicator generating section 504, and assist section 505 mentioned before, vehicle control device 500 includes a past trajectory information acquiring section 506 and a vehicle state predicting section 507 (i.e., a vehicle travel trajectory predicting section or a vehicle motion state predicting section).

Past trajectory information acquiring section 506 acquires information about past travel trajectories of vehicle 10 from a car navigation system included in vehicle 10 or from an external cloud (server).

Then, vehicle state predicting section 507 predicts a future motion state and/or travel trajectory of vehicle 10 on the basis of: the speed, acceleration, yaw rate, jerk, and the like, which are physical quantities related to the motion of vehicle 10; the steering operation amount (the steering angle of steered road wheels) and the like, which are physical quantities related to driving operations of vehicle 10; and the past travel trajectories of vehicle 10.

Note that, hereinbelow, the travel trajectories predicted by vehicle state predicting section 507 is also referred to as a predicted travel trajectory.

Here, trajectory generating section 503 acquires information about the motion state or the travel trajectory predicted by vehicle state predicting section 507 and generates the reference trajectory taking into account the motion state and/or travel trajectory predicted by vehicle state predicting section 507 in addition to the travelable area ahead of vehicle 10 and the predetermined constraints in travel of vehicle 10 through the travelable area.

In addition, in addition to the information about the reference trajectory, indicator generating section 504 acquires the information about the motion state or travel trajectory predicted by vehicle state predicting section 507 and acquires the reference information.

Then, for example, assist section 505 determines assist amounts for causing the predicted travel trajectory to approach the reference trajectory.

Hereinbelow, a reference trajectory generation process performed by trajectory generating section 503 is explained in detail.

Vehicle control device 500 sets the travelable area ahead of vehicle 10 on the basis of the external-environment information about vehicle 10 recognized by external-environment recognizing section 200.

For example, vehicle control device 500 sets, as the travelable area, a region between the left and right lane marker (white lines) on the road or between the left and right road edges on the road.

That is, vehicle control device 500 sets a region in a lane recognized on the basis of lane markers or the like as the basic travelable area.

In addition, in a case in which there is some object in the lane, vehicle control device 500 may set a region excluding the object as the travelable area.

For example, the object is a stopped vehicle, a preceding vehicle, an oncoming vehicle, a fallen object, an installed object, a tree, a utility pole, a pedestrian, a signboard, or the like.

In addition, vehicle control device 500 may set, as a collision risk region, a blind area behind the object or the like in anticipation of a vehicle, a pedestrian, or the like suddenly appearing from the blind area behind the object and sets, as the travelable area, a region obtained by excluding the collision risk region from the basic travelable area.

In addition, in a case in which there is an unrecognizable region ahead of vehicle 10, a region obtained by excluding the unrecognizable region from the basic travelable area may be set as the travelable area.

Then, for example, trajectory generating section 503 generates, as the reference trajectory, a trajectory to pass through the travelable area and reduce the absolute value(s) of the lateral acceleration and/or lateral jerk of vehicle 10 as much as possible.

That is, trajectory generating section 503 may generate the reference trajectory on the basis of a constraint that the absolute value of the lateral acceleration in the travelable area is minimized (i.e., generation of the lateral acceleration is inhibited as much as possible) or a constraint that the absolute value of the lateral jerk in the travelable area is minimized (i.e., generation of the lateral jerk is inhibited as much as possible).

In addition, trajectory generating section 503 may use, as constraints, the maximum speed, the minimum speed, the maximum value of the absolute value of the lateral acceleration, the maximum value of the absolute value of the lateral jerk, and the like for each predetermined geographical point and generate the reference trajectory such that these constraints are not violated.

For example, the maximum speed is a legal maximum speed, and the minimum speed is a legal minimum speed or a predetermined minimum speed for avoiding disruption of traffic flow.

In addition, for example, the maximum value of the absolute value of the lateral acceleration is a value set on the basis of the ride comfort of vehicle 10, a lateral acceleration tolerated in automated driving, and the like, and the maximum value of the absolute value of the lateral jerk of vehicle 10 is a value set on the basis of the ride comfort of vehicle 10 and the like.

In addition, in a case in which there is there is an object such as another vehicle, a pedestrian, an obstacle, a fallen object, a signboard, or the like in the travelable region, trajectory generating section 503 may generate the reference trajectory using the object as a constraint.

That is, trajectory generating section 503 may determine, as the reference trajectory, a trajectory along which vehicle 10 travels avoiding objects, and furthermore may generate the reference trajectory to reduce the absolute value(s) of the lateral acceleration and/or lateral jerk as much as possible while avoiding the objects.

In addition, trajectory generating section 503 may acquire, as constraints, road surface information such as a road surface friction coefficient $\mu$, a road surface cant, a road surface inclination, road surface undulation, road surface irregularities, speed bumps, or potholes and set the reference trajectory using them as constraints.

Specifically, trajectory generating section 503 may set the reference trajectory to avoid a region with a low road surface friction coefficient $\mu$ or irregularities on the road surface.

In addition, in a case in which a trajectory to pass through a location with a low road surface friction coefficient $\mu$ or irregularities on the road surface is adopted, trajectory generating section 503 may set the vehicle speed in the reference trajectory such that the location with the low road surface friction coefficient $\mu$ is, or irregularities on the road surface are, passed through, in a decelerated state.

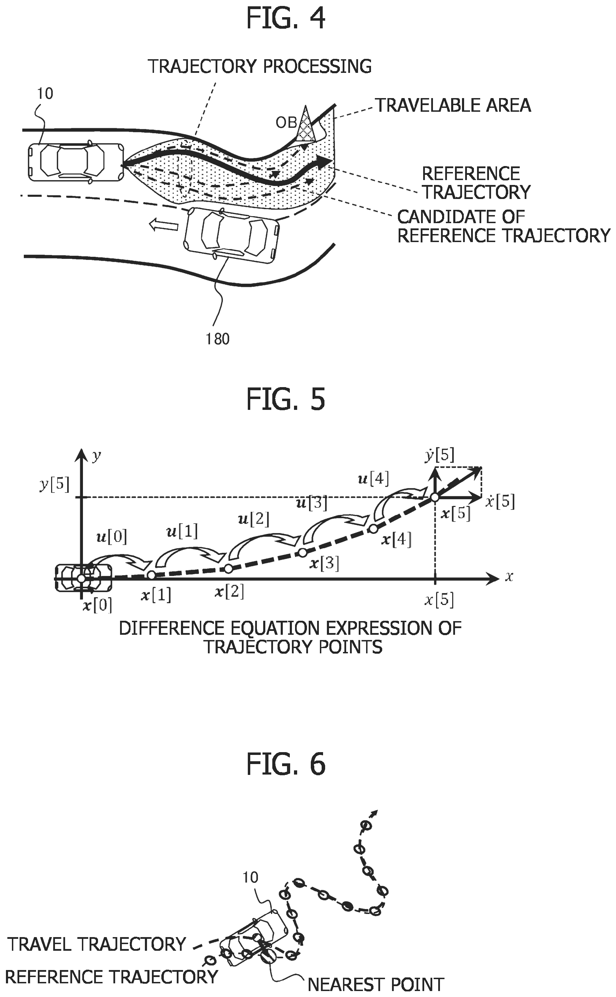

FIG. 4 is a drawing illustrating an example of the travelable area and the reference trajectory on a curved road.

In FIG. 4, the hatched region is the travelable area. In the case of FIG. 4, a region obtained by excluding the region of an object OB represented by a triangle in the drawing from the region in the lane and excluding a region for avoiding an oncoming vehicle 180 is set as the travelable area of vehicle 10.

Then, trajectory generating section 503 generates, within the travelable area, the reference trajectory to reduce the absolute value of the lateral acceleration or lateral jerk as much as possible, for example.

That is, trajectory generating section 503 selects as appropriate, as the reference trajectory, a trajectory within the travelable area that can maintain safety based on object information and provides good ride comfort by inhibiting generation of lateral acceleration and lateral jerk as much as possible.

Here, as an example of a trajectory designing method, an example in which trajectory points are expressed by a difference equation is explained.

For example, an expression of trajectory points by a difference equation is an equation 1.

FIG. 5 illustrates that, in the difference equation expression, a change over time is added to a trajectory point x[n] at time n to thereby determine a trajectory point x[n+1] at time n+1.

[Equation 1]

$$x[k+1] = A_d x[k] + B_d u[k]$$

State $\quad x = [x_1 x_2 x_3 y_1 y_2 y_3]^T := [x \dot{x} \ddot{x} y \dot{y} \ddot{y}]^T$

Input $\quad u = [u_1 u_2]^T$

$$A_d = \begin{bmatrix} 1 & T & T^2/2 & 0 & 0 & 0 \\ 0 & 1 & T & 0 & 0 & 0 \\ 0 & 0 & 1 & 0 & 0 & 0 \\ 0 & 0 & 0 & 1 & T & T^2/2 \\ 0 & 0 & 0 & 0 & 1 & T \\ 0 & 0 & 0 & 0 & 0 & 1 \end{bmatrix}, \quad B_d = \begin{bmatrix} T^3/6 & 0 \\ T^2/2 & 0 \\ T & 0 \\ 0 & T^3/6 \\ 0 & T^2/2 \\ 0 & T \end{bmatrix}$$

Then, trajectory generating section 503 may determine an input sequence u[0], u[1], ..., and u[N-1] to thereby generate the reference trajectory of vehicle 10.

Here, trajectory generating section 503 determines such an input sequence u[0], u[1], ..., and u[N-1] that minimizes an evaluation function J(x, u) represented by an equation 2.

[Equation 2]

$$J(x,u) = \varphi(x[N]) + \sum_{k=0}^{N-1} \mathcal{L}(x[k], u[k], k)$$

Evaluation function J(x, u) is designed to achieve the objective when evaluation function J(x, u) is minimized.

For example, in a case in which travel of a preceding vehicle is taken into account (i.e., in a case in which the trajectory of a preceding vehicle is used as a constraint), the value of evaluation function J(x, u) is designed such that its value decreases as the trajectory approaches the position of the preceding vehicle.

Note that, as the method of determining input sequence u[0], u[1], ..., and u[N-1], microcomputer 500A may selectively use as appropriate a known technique such as gradient descent, a conjugate gradient method, Newton's method, or a quasi-Newton's method.

Note that, whereas assist section 505 determines assist amounts for causing travel of vehicle 10 according to operations by the driver to approach the reference information acquired on the basis of the reference trajectory on the basis of the reference information, as the method of determining a reference point on the reference trajectory, assist section 505 uses a method in which the nearest point on the reference trajectory is used as the reference point or a method in which a predetermined point on the reference trajectory located ahead in the advancing direction of vehicle 10 is used as the reference point.

FIG. 6 illustrates a case in which the nearest point on the reference trajectory is used as the reference point, and in this case, assist section 505 determines assist amounts referring to the nearest point which is a point on the reference trajectory closest to vehicle 10.

In addition, in a case in which a predetermined point on the reference trajectory located ahead in the advancing direction of vehicle 10 is used as the reference point, assist section 505 determines assist amounts referring to a preview point on the reference trajectory located apart from vehicle 10 by a preview distance Lp.

Here, preview distance Lp may be a cumulative distance when the reference trajectory is followed or a distance in the advancing direction of vehicle 10.

Furthermore, preview distance Lp may be a fixed value and may be set to Lp = Tp*V on the basis of a vehicle speed V and a preview time Tp given as a constant value.

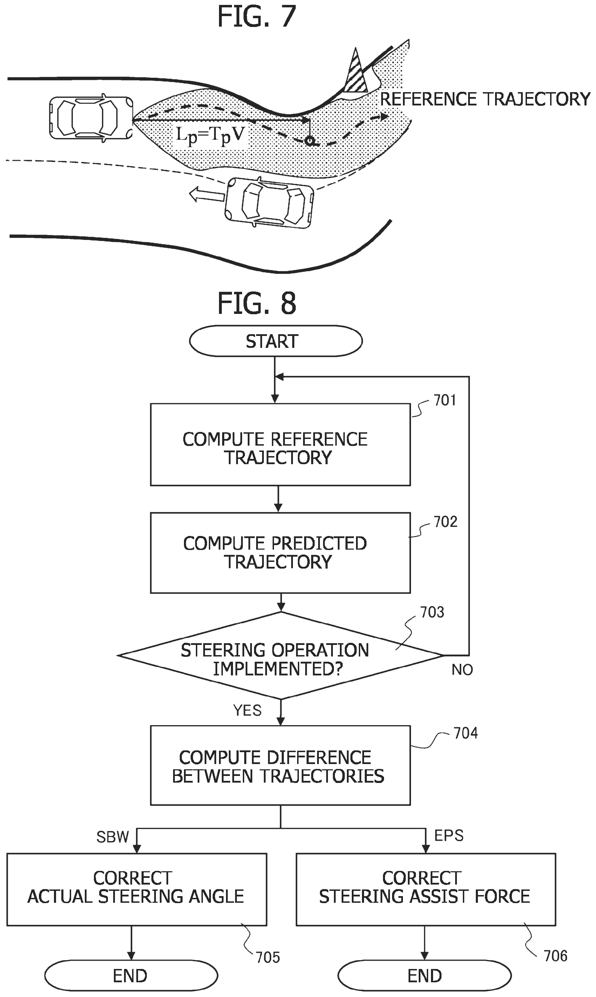

FIG. 7 illustrates the reference point in a case in which preview distance Lp is a distance in the advancing direction of vehicle 10 and preview distance Lp is set to Lp = Tp*V.

Hereinbelow, steering-angle (steering-amount) assist control in assist control performed by vehicle control device 500 is explained in detail.

As a pattern of steering-angle assist control performed by vehicle control device 500, for example, any of the following five types of steering-angle assist pattern may be adopted.

First steering-angle assist pattern: The steering angle is assisted depending on the difference between the position of the reference trajectory and the position of the predicted travel trajectory.

Second steering-angle assist pattern: The steering angle is assisted depending on the curvature of the reference trajectory.

Third steering-angle assist pattern: The steering angle is assisted depending on the derivative value of the curvature of the reference trajectory.

Fourth steering-angle assist pattern: The steering angle is assisted depending on the difference between the curvature of the reference trajectory and the curvature of the predicted travel trajectory.

Fifth steering-angle assist pattern: The steering angle is assisted depending on the difference between the derivative value of the curvature of the reference trajectory and the derivative value of the curvature of the predicted travel trajectory.

Here, since the first steering-angle assist pattern, the fourth steering-angle assist pattern, and the fifth steering-angle assist pattern use the predicted travel trajectory, these are steering-angle assist patterns that can be implemented with vehicle control device 500 illustrated in FIG. 3.

On the other hand, since the second steering-angle assist pattern and the third steering-angle assist pattern do not use the predicted travel trajectory, these are steering-angle assist patterns that can be implemented with vehicle control device 500 illustrated in FIG. 2.

Hereinbelow, processing content of each steering-angle assist pattern is explained in detail.

"First Steering-Angle Assist Pattern"

The flowchart in FIG. 8 illustrates a control process of the first steering-angle assist pattern for assisting the steering angle depending on the difference between the position of the reference trajectory as the reference information and the position of the predicted travel trajectory.

At Step S701, vehicle control device 500 generates the reference trajectory using the current position of vehicle 10 as a starting point.

Note that, at Step S701, vehicle control device 500 may generate the reference trajectory such that the reference trajectory connects to the predicted travel trajectory or a part thereof, instead of generating the reference trajectory using the current position of vehicle 10 as a starting point or may generate the reference trajectory such that the motion state connects to the predicted vehicle motion state (yaw rate, yaw rate derivative, acceleration, jerk) (i.e., such that the vehicle motion state changes continuously).

That is, trajectory generating section 503 may generate the reference trajectory taking a prediction value of the predicted travel trajectory or the vehicle motion state into account in addition to the travelable area and the constraints.

In addition, at Step S702, vehicle control device 500 determines the predicted travel trajectory of vehicle 10.

Next, at Step S703, vehicle control device 500 determines whether or not the driver is implementing a steering operation, that is, whether or not the driver is performing a rotational operation of the steering wheel.

Here, in a case in which the driver is not implementing a steering operation, vehicle control device 500 returns to Step S701 without implementing assist control.

On the other hand, in a case in which the driver is implementing a steering operation, vehicle control device 500 proceeds to Step S704.

At Step S704, vehicle control device 500 determines a lateral positional deviation amount between the reference trajectory and the predicted travel trajectory.

Thereafter, vehicle control device 500 proceeds to Step S705 if steering device 610 is the steer-by-wire system, and proceeds to Step S706 if steering device 610 is the electric power steering device.

At Step S705, vehicle control device 500 causes the actual steering angle of the steered road wheels (front wheels 11 and 12) in the steer-by-wire system to reflect an assist amount (steering angle correction amount) based on the lateral positional deviation amount between the reference trajectory and the predicted travel trajectory determined at Step S704.

That is, at Step S705, vehicle control device 500 corrects the actual steering angle resulting from a steering wheel operation by the driver on the basis of the lateral positional deviation amount between the reference trajectory and the predicted travel trajectory such that the predicted travel trajectory approaches the reference trajectory.

On the other hand, at Step S706, vehicle control device 500 causes the steering assist force generated by the power steering motor of the electric power steering device to reflect an assist amount (steering assist force correction amount) based on the lateral positional deviation amount between the reference trajectory and the predicted travel trajectory determined at Step S704.

That is, at Step S706, vehicle control device 500 reduces the steering assist force to make the steering wheel operation feel heavier when the driver tends to perform excessive steering operations with respect to a steering angle change along the reference trajectory, and in contrast, increases the steering assist force to make the steering wheel operation feel lighter when the driver tends to perform insufficient steering operations with respect to a steering angle change along the reference trajectory.

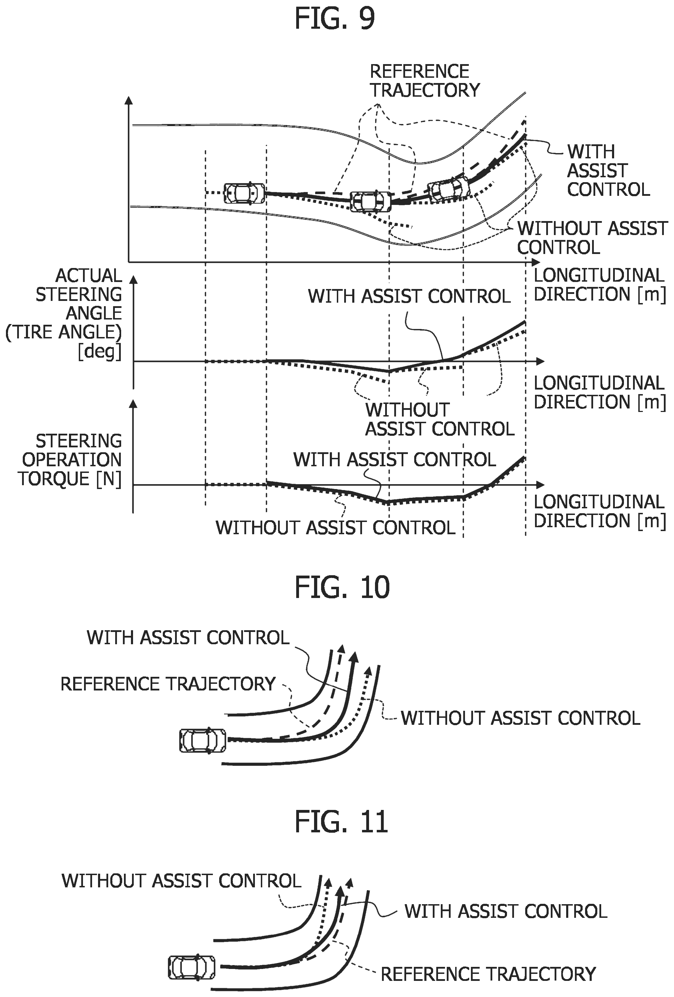

FIG. 9 is a drawing illustrating the travel trajectory, the actual steering angle, and the steering operation torque in a case in which the control process illustrated in the flowchart in FIG. 8 is applied to the steer-by-wire system.

Vehicle control device 500 periodically updates the reference trajectory using the current position of vehicle 10 as a starting point and compares the reference trajectory and the predicted travel trajectory.

Then, vehicle control device 500 corrects the actual steering angle in a direction in which the predicted travel trajectory approaches the reference trajectory.

While vehicle control device 500 corrects the actual steering angle in a direction in which the predicted travel trajectory approaches the reference trajectory here, steering reaction torque applied to the steering wheel in the steer-by-wire system is maintained at a normal value which is the same as that in a case in which assist control is not implemented.

That is, vehicle control device 500 determines an assist amount for steering front wheels 11 and 12 without rotating the steering wheel in assist control for the steer-by-wire system.

Accordingly, since the steering operation torque applied by the driver does not change due to assist control, vehicle 10 may be guided to travel along the travel trajectory close to the reference trajectory while inhibiting the driver from feeling a sense of discomfort.

FIG. 10 and FIG. 11 are drawings for explaining differences in a correction direction of the actual steering angle depending on the positional relationship between the predicted travel trajectory and the reference trajectory.

FIG. 10 illustrates a case in which the reference trajectory is on the same side as the steering direction according to an operation by the driver and is located ahead in the steering direction, and at this time, vehicle control device 500 determines an assist amount to increase the actual steering angle (the steering amount of the steered road wheels).

That is, in a case in which the reference trajectory is positioned on the inner side of a turn with respect to the predicted travel trajectory when the reference trajectory and the predicted travel trajectory turn in the same direction, vehicle control device 500 causes the travel trajectory of vehicle 10 to approach the reference trajectory by increasing the actual steering angle to thereby cause vehicle 10 to pass on the inner side of the turn.

In addition, FIG. 11 illustrates a case in which the reference trajectory is on the same side as the steering direction according to an operation by the driver and is located behind in the steering direction, and at this time, vehicle control device 500 determines an assist amount to reduce or maintain the actual steering angle (the steering amount of the steered road wheels).

That is, in a case in which the reference trajectory is positioned on the outer side of a turn with respect to the predicted travel trajectory when the reference trajectory and the predicted travel trajectory are paths that turn in the same direction, vehicle control device 500 causes the travel trajectory of vehicle 10 to approach the reference trajectory by reducing the actual steering angle to thereby cause vehicle 10 to pass on the further outer side of the turn or maintaining the actual steering angle to thereby inhibit vehicle 10 from facing the inner side of the turn.

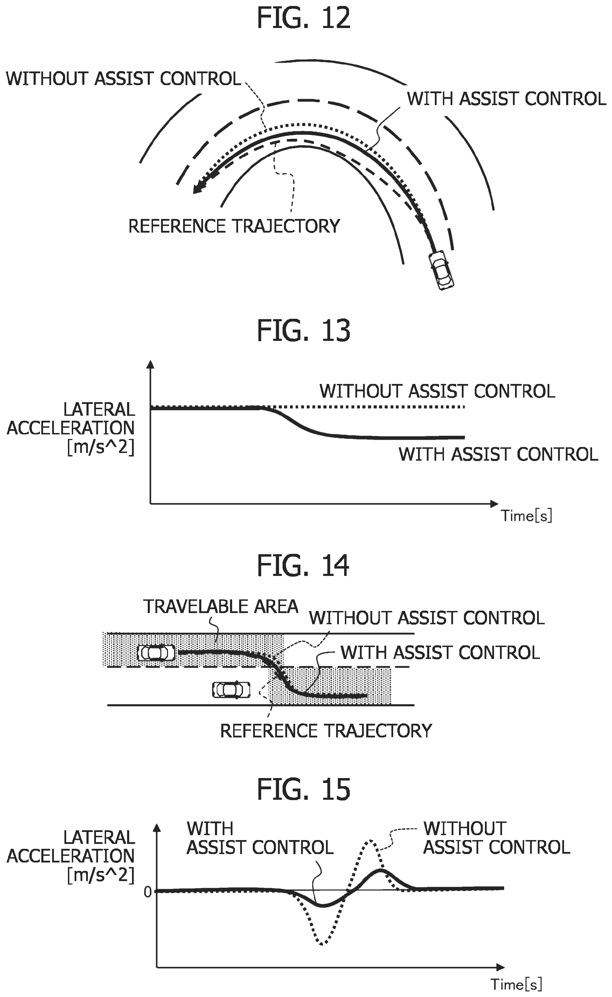

FIG. 12 and FIG. 13 are drawings for explaining effects achieved by implementing control (first steering-angle assist pattern) to cause the predicted travel trajectory of vehicle 10 to approach the reference trajectory on a curved road.

FIG. 12 illustrates the reference trajectory, the travel trajectory without assist control, and the travel trajectory with assist control on the curved road.

In addition, FIG. 13 illustrates a lateral acceleration generated during travel without assist control on the curved road and a lateral acceleration generated during traveling with assist control on the curved road.

In a case in which the reference trajectory is set such that generation of a lateral acceleration or a lateral jerk in the travelable area is inhibited as much as possible, for example, the reference trajectory is set as an out-in-out travel trajectory.

Here, if assist control to cause the travel trajectory to approach the reference trajectory is implemented when the driver performs a steering operation to travel along a trajectory to stay at the center of the lane, the trajectory along which vehicle 10 travels approaches the out-in-out trajectory. As a result, a lateral acceleration generated during turning is inhibited, and the ride comfort of vehicle 10 is improved.

In addition, FIG. 14 and FIG. 15 are drawings for explaining effects achieved by implementing control to cause the predicted travel trajectory of vehicle 10 to approach the reference trajectory when vehicle 10 performs a lane change on a straight road such as a freeway.

FIG. 14 illustrates the reference trajectory, the travel trajectory without assist control, and the travel trajectory with assist control during a lane change of vehicle 10 on the straight road.

In addition, FIG. 15 illustrates a lateral acceleration generated when a lane change is performed without assist control and a lateral acceleration generated when a lane change is performed with assist control.

The reference trajectory is set such that a lateral acceleration and a lateral jerk generated when a lane change is performed are inhibited as much as possible to thereby keep the steering speed low due to assist control and give a sense of security to occupants of vehicle 10.

In contrast, if the skill level of the driver is low, the steering speed for a lane change is fast, and a significant lateral acceleration and lateral jerk are generated.

That is, when assist control is implemented to cause the predicted travel trajectory of vehicle 10 to approach the reference trajectory, the steering speed is kept low to inhibit generation of a lateral acceleration and a lateral jerk, and accordingly a lane change that can give a sense of security to occupants of vehicle 10 is enabled.

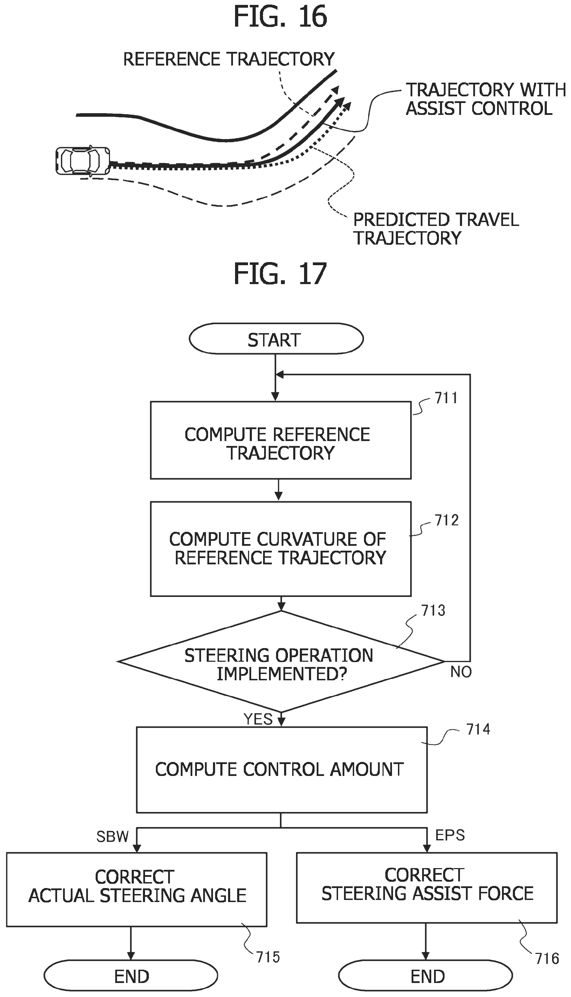

FIG. 16 illustrates a process of changing a steering timing depending on a traveling location.

FIG. 16 illustrates an example of a case in which a steering timing of the reference trajectory is earlier than a steering timing of the predicted travel trajectory.

In this case, even when steering has not been performed in the predicted travel trajectory, assist section 505 may implement assist control to thereby cause a turning-start timing of vehicle 10 to approach a turning-start timing of the reference trajectory.

"Second Steering-Angle Assist Pattern"

The flowchart in FIG. 17 illustrates a control process of the second steering-angle assist pattern for assisting the steering angle depending on the magnitude of the curvature of the reference trajectory.

At Step S711, vehicle control device 500 generates the reference trajectory.

In the generation of the reference trajectory at Step S711, the position of vehicle 10 need not be used as a starting point, and vehicle control device 500 may generate, as the reference trajectory, an ideal travel trajectory independently of the actual traveling position of vehicle 10.

Next, at Step S712, vehicle control device 500 determines the curvature of the reference trajectory as the reference information and further computes a steering angle for tracing the reference trajectory.

Vehicle control device 500 may convert the curvature of the reference trajectory into a steering angle using an equation 3.

Note that, in equation 3, $\delta$ denotes the steering angle, $\kappa$ denotes the curvature, V denotes the vehicle speed, A denotes the stability factor, and L denotes the wheelbase.

[Equation 3]

$$\delta = (1 + AV^2)\kappa L$$

Then, at Step S713, vehicle control device 500 determines whether or not the driver is implementing a steering operation, that is, whether or not the driver is performing a rotational operation of the steering wheel.

Here, in a case in which the driver is not implementing a steering operation, vehicle control device 500 returns to Step S711 without implementing assist control.

On the other hand, in a case in which the driver is implementing a steering operation, vehicle control device 500 proceeds to Step S714.

At Step S714, vehicle control device 500 determines a steering assist amount on the basis of the curvature of the reference trajectory or the steering angle for tracing the reference trajectory determined at Step S713.

Then, vehicle control device 500 proceeds to Step S715 if steering device 610 is the steer-by-wire system and proceeds to Step S716 if steering device 610 is the electric power steering device.

At Step S715, vehicle control device 500 causes the actual steering angle of the steered road wheels (front wheels 11 and 12) in the steer-by-wire system to reflect the assist amount (steering angle correction amount) determined at Step S714.

That is, during steering by the driver, vehicle control device 500 changes the actual steering angle in the steer-by-wire system depending on the curvature (steering angle) of the reference trajectory.

On the other hand, at Step S716, vehicle control device 500 causes the steering assist force generated by the power steering motor of the electric power steering device to reflect the assist amount (steering assist force correction amount) determined at Step S714.

That is, during steering by the driver, vehicle control device 500 changes the steering assist force in the electric power steering device depending on the curvature (steering angle) of the reference trajectory.

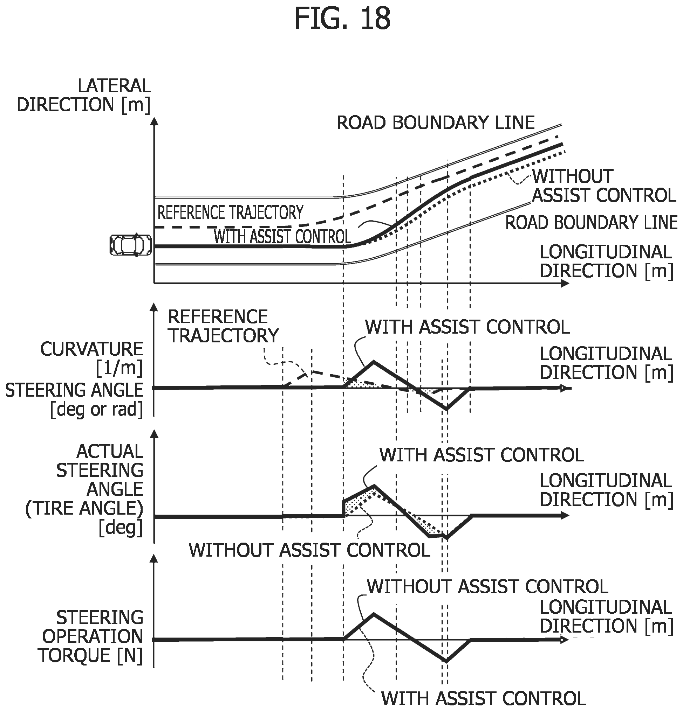

FIG. 18 is a drawing illustrating changes, depending on the longitudinal distance, in each trajectory, curvature (steering angle), actual steering angle, and steering operation torque in a case in which the control process of the second steering-angle assist pattern illustrated in the flowchart in FIG. 17 is applied to the steer-by-wire system.

FIG. 18 illustrates a case in which the road on which vehicle 10 is traveling curves left at an obtuse angle, and the reference trajectory is generated so as to start turning before the corner of the road, and in which a steering operation by the driver is delayed with respect to the reference trajectory.

In response to the delay of the steering operation, while the curvature (steering angle) of the reference trajectory is greater than the actual steering angle at the starting time point of the steering operation, vehicle control device 500 corrects the actual steering angle to increase by a correction amount depending on the difference between the actual steering angle at the starting time point of the steering operation and the curvature (steering angle) of the reference trajectory.

Thereafter, when the curvature (steering angle) of the reference trajectory decreases to be smaller than the actual steering angle at the starting time point of the steering operation, vehicle control device 500 corrects the actual steering angle to decrease by a correction amount depending on the difference between the actual steering angle at the starting time point of the steering operation and the curvature (steering angle) of the reference trajectory.

Here, vehicle control device 500 maintains the steering reaction torque at the normal value which is the same as that in a case in which assist control is not implemented, and the steering operation torque applied by the driver and the steering wheel operation angle are not affected by assist control.

Accordingly, vehicle 10 may be caused to travel along a trajectory with curvature close to the curvature of the reference trajectory while inhibiting the driver from feeling a sense of discomfort.

In addition, in assist control to cause the curvature of the trajectory in which vehicle 10 actually passes through to approach the curvature of the reference trajectory, assist for reducing a positional deviation between the reference trajectory and the trajectory of vehicle 10 is not implemented. Accordingly, as illustrated in FIG. 18, even if there is a deviation between the reference trajectory and the trajectory of vehicle 10, unnatural vehicle behavior associated with correction of the positional deviation does not occur.

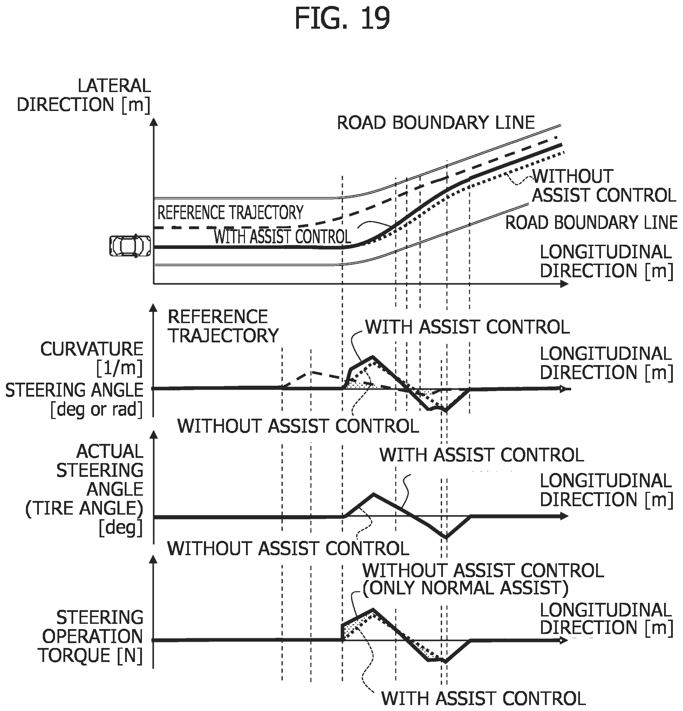

FIG. 19 is a drawing illustrating changes, depending on the longitudinal distance, in each trajectory, curvature (steering angle), steering operation torque, and steering assist force in a case in which the control process of the second steering-angle assist pattern illustrated in the flowchart in FIG. 17 is applied to the electric power steering device.

Note that FIG. 19 is different from FIG. 18 in that steering device 610 is the electric power steering device while the road shape and reference trajectory, and furthermore, the steering operations by the driver are the same as in FIG. 18.

In the case of the electric power steering device, an increase in the steering assist force results in an increase in the steering angle; in contrast, a decrease in the steering assist force results in a decrease in the steering angle.

Accordingly, vehicle control device 500 implements correction to increase the steering assist force in a situation in which correction to increase the steering angle is being performed in assist control in the steer-by-wire system illustrated in FIG. 18 and implements correction to reduce the steering assist force in a situation in which correction to reduce the steering angle is being performed in assist control in the steer-by-wire system illustrated in FIG. 18.

Thereby, vehicle 10 may be caused to travel along a trajectory with curvature close to the curvature of the reference trajectory with little influence on the steering operation torque applied by the driver.

"Third Steering-Angle Assist Pattern"

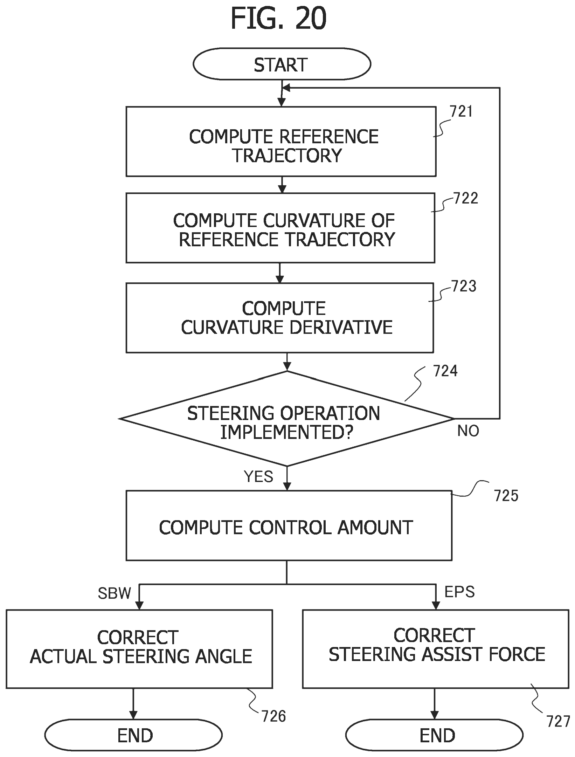

The flowchart in FIG. 20 illustrates a control process of the third steering-angle assist pattern for assisting the steering angle depending on the magnitude of the derivative value (time derivative value) of the curvature of the reference trajectory.

At Step S721, vehicle control device 500 generates the reference trajectory.

Next, at Step S722, vehicle control device 500 determines the curvature of the reference trajectory and further computes a steering angle for tracing the reference trajectory, on the basis of equation 3 mentioned before.

Furthermore, at Step S723, vehicle control device 500 computes, as the reference information, the derivative value of the curvature of the reference trajectory determined at Step S722 and the steering angular speed, which is the derivative value (time derivative value) of the steering angle for tracing the reference trajectory.

Then, at Step S724, vehicle control device 500 determines whether or not the driver is implementing a steering operation.

Here, in a case in which the driver is not implementing a steering operation, vehicle control device 500 returns to Step S721 without implementing assist control.

On the other hand, in a case in which the driver is implementing a steering operation, vehicle control device 500 proceeds to Step S725.

At Step S725, vehicle control device 500 determines a steering assist amount on the basis of the derivative value of the curvature of the reference trajectory determined or the steering angular speed for tracing the reference trajectory at Step S723.

Then, vehicle control device 500 proceeds to Step S726 if steering device 610 is the steer-by-wire system and proceeds to Step S727 if steering device 610 is the electric power steering device.

At Step S726, vehicle control device 500 causes the actual steering angle of the steered road wheels (front wheels 11 and 12) in the steer-by-wire system to reflect the assist amount (steering angle correction amount) determined at Step S725.

On the other hand, at Step S727, vehicle control device 500 causes the steering assist force generated by the power steering motor of the electric power steering device to reflect the assist amount (steering assist force correction amount) determined at Step S725.

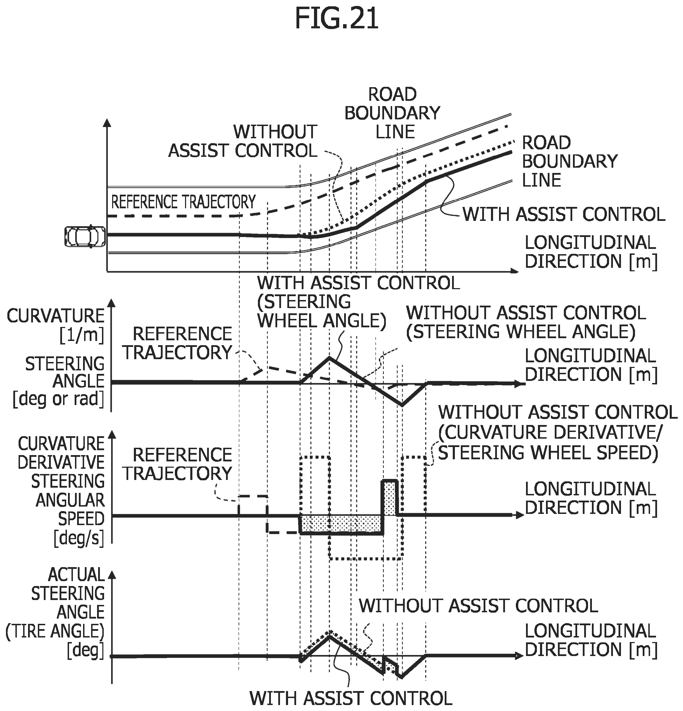

FIG. 21 is a drawing illustrating changes, depending on the longitudinal distance, in each trajectory, curvature (steering angle), curvature derivative (steering angular speed), and actual steering angle in a case in which the control process of the third steering-angle assist pattern illustrated in the flowchart in FIG. 20 is applied to the steer-by-wire system.

Note that the road shape and reference trajectory, and furthermore, the steering operations by the driver in FIG. 21, are the same as in FIG. 18.

Here, during steering by the driver, vehicle control device 500 changes the actual steering angle in the steer-by-wire system depending on the derivative value of the curvature (steering angle) of the reference trajectory.

That is, vehicle control device 500 reduces the actual steering angle in a period during which the driver is steering, the derivative value of the curvature of the reference trajectory is negative, and the curvature (steering angle) of the reference trajectory is changing to decrease, to thereby keep the curvature change of the trajectory along which vehicle 10 travels, low.

Note that, in the present application, a decrease in the steering angle refers to changes in the steering angle toward the neutral position (straight-ahead position), and an increase in the steering angle refers to changes in the steering angle away from the neutral position.

In addition, vehicle control device 500 increases the actual steering angle in a period during which the driver is steering, the derivative value of the curvature of the reference trajectory is positive, and the curvature (steering angle) of the reference trajectory is changing to increase, to thereby speed up the turning response.

Here, vehicle control device 500 maintains the steering reaction torque at the normal value which is the same as that in a case in which assist control is not implemented, and the steering operation torque applied by the driver and the steering wheel operation angle are not affected by assist control.

Accordingly, vehicle 10 may be caused to travel along a trajectory with a curvature change close to the derivative value of the curvature of the reference trajectory while inhibiting the driver from feeling a sense of discomfort.

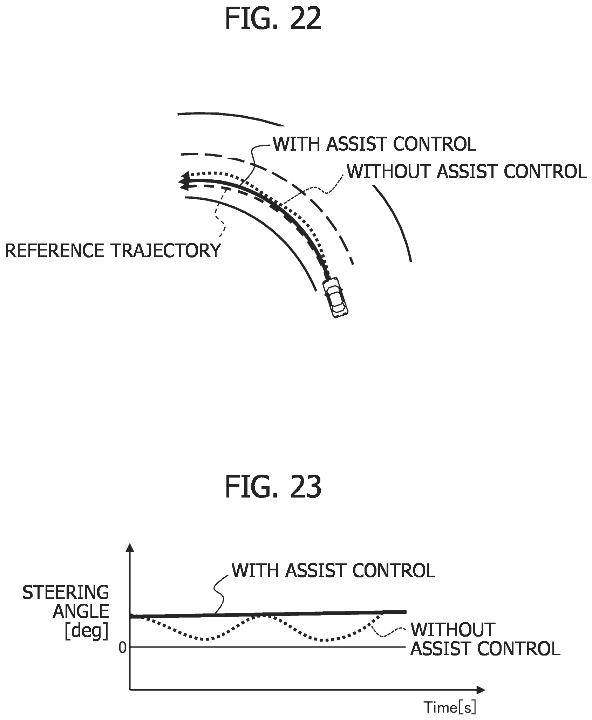

FIG. 22 and FIG. 23 are drawings for explaining operational effects of the control process of the third steering-angle assist pattern.

In a case in which the skill level of the driver is low, for example, an appropriate course cannot be taken through a curve, and corrective steering operations increase as illustrated as "without assist control" in FIG. 22 and FIG. 23.

In contrast, by implementing assist control to assist the steering angle depending on the derivative value of the curvature of the reference trajectory, the actual steering angle during turning is stabilized even when the skill level of the driver is low, and a sense of security and a sense of stability on a curve can be obtained.

"Fourth Steering-Angle Assist Pattern"

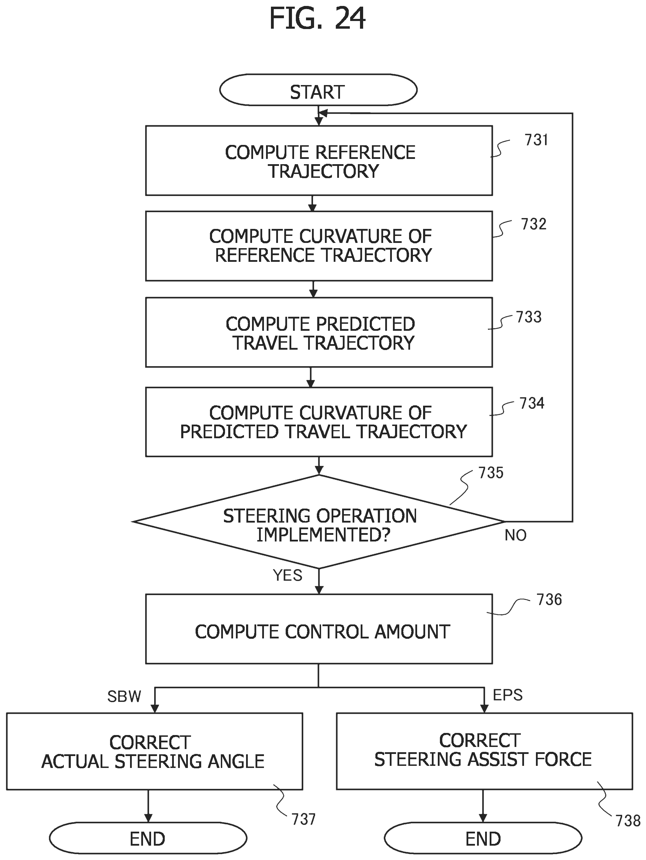

The flowchart in FIG. 24 illustrates a control process of the fourth steering-angle assist pattern for assisting the steering angle depending on the difference between the curvature of the reference trajectory and the curvature of the predicted travel trajectory.

At Step S731, vehicle control device 500 generates the reference trajectory.

Next, at Step S732, vehicle control device 500 computes the curvature (steering angle) of the reference trajectory.

In addition, at Step S733, vehicle control device 500 determines the predicted travel trajectory of vehicle 10.

Then, at Step S734, vehicle control device 500 computes the curvature (steering angle) of the predicted travel trajectory.

Next, at Step S735, vehicle control device 500 determines whether or not the driver is implementing a steering operation.

Here, in a case in which the driver is not implementing a steering operation, vehicle control device 500 returns to Step S731 without implementing assist control.

On the other hand, in a case in which the driver is implementing a steering operation, vehicle control device 500 proceeds to Step S736.

At Step S736, vehicle control device 500 determines a steering-angle assist amount on the basis of the difference between the curvature (steering angle) of the reference trajectory and the curvature (steering angle) of the predicted travel trajectory.

Then, vehicle control device 500 proceeds to Step S737 if steering device 610 is the steer-by-wire system and proceeds to Step S738 if steering device 610 is the electric power steering device.

At Step S737, vehicle control device 500 causes the actual steering angle of the steered road wheels (front wheels 11 and 12) in the steer-by-wire system to reflect the assist amount (steering angle correction amount) determined at Step S736.

That is, in a case in which steering device 610 is the steer-by-wire system, vehicle control device 500 corrects the actual steering angle with a correction amount depending on the difference between the curvature of the reference trajectory and the curvature of the predicted travel trajectory to thereby cause the curvature of the predicted travel trajectory to approach the curvature of the reference trajectory.

In addition, at Step S738, vehicle control device 500 causes the steering assist force in the electric power steering device to reflect the assist amount (steering assist force correction amount) determined at Step S736.

That is, in a case in which steering device 610 is the electric power steering device, vehicle control device 500 corrects the steering assist force with a correction amount depending on the difference between the curvature of the reference trajectory and the curvature of the predicted travel trajectory to thereby cause the curvature of the predicted travel trajectory to approach the curvature of the reference trajectory.

Specifically, vehicle control device 500 strengthens steering assist force in a case in which the curvature of the reference trajectory is greater than the curvature of the predicted travel trajectory, and in contrast, weakens the steering assist force in a case in which the curvature of the reference trajectory is smaller than the curvature of the predicted travel trajectory.

Note that, in assist control (fourth steering-angle assist pattern) to cause the curvature of the predicted travel trajectory to approach the curvature of the reference trajectory, vehicle control device 500 may implement steering assist control (hereinbelow, also referred to as offset travel assist control) such that vehicle 10 travels along a trajectory to run parallel to the reference trajectory on the inner side or outer side of the reference trajectory.

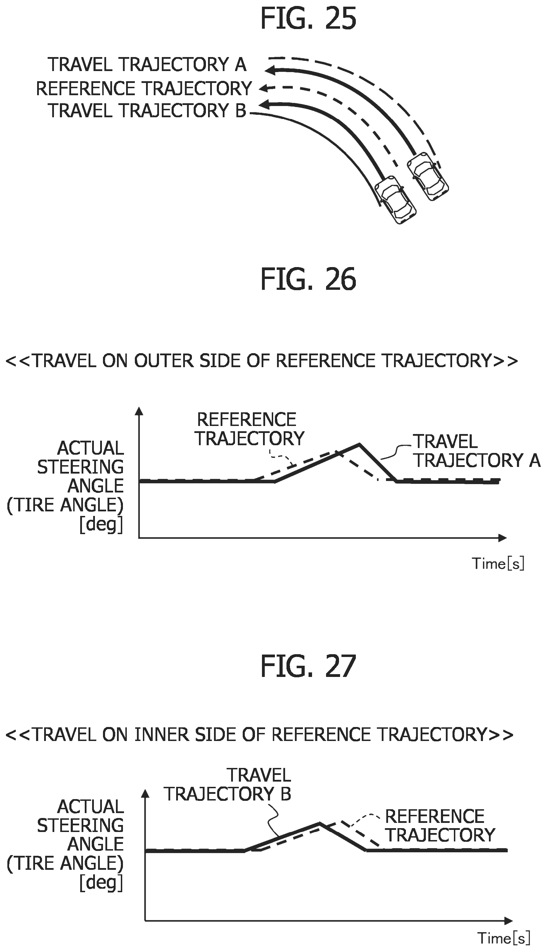

Hereinbelow, offset travel assist control is outlined with reference to FIG. 25 to FIG. 27.

FIG. 25 illustrates a travel trajectory A that runs parallel to the reference trajectory on the outer side of the reference trajectory on a curved road and a travel trajectory B that runs parallel to the reference trajectory on the outer side of the reference trajectory on the curved road.

Then, FIG. 26 illustrates an example of changes in the actual steering angle for causing vehicle 10 to travel along travel trajectory A on the outer side of the reference trajectory illustrated in FIG. 25 and changes in the actual steering angle for causing vehicle 10 to travel along the reference trajectory illustrated in FIG. 25.

In a case in which vehicle 10 is caused to travel along travel trajectory A, vehicle control device 500 may delay the timing of steering or increase the actual steering angle compared with the case in which vehicle 10 is caused to travel along the reference trajectory, to thereby assist travel along the travel trajectory A on the outer side of the reference trajectory.

In addition, FIG. 27 illustrates an example of changes in the actual steering angle for causing vehicle 10 to travel along travel trajectory B on the inner side of the reference trajectory illustrated in FIG. 25 and changes in the actual steering angle for causing vehicle 10 to travel along the reference trajectory.

In a case in which vehicle 10 is caused to travel along travel trajectory B, vehicle control device 500 may advance the timing of steering or reduce the actual steering angle compared with the case in which vehicle 10 is caused to travel along the reference trajectory, to thereby assist travel along the travel trajectory B on the inner side of the reference trajectory.

That is, vehicle control device 500 may determine a steering-angle assist amount such that the intervention timing for the steering angle (the steering amount of the steered road wheels) of vehicle 10 differs depending on whether vehicle 10 is traveling on the inner side or outer side of the turn of the reference trajectory.

"Fifth Steering-Angle Assist Pattern"

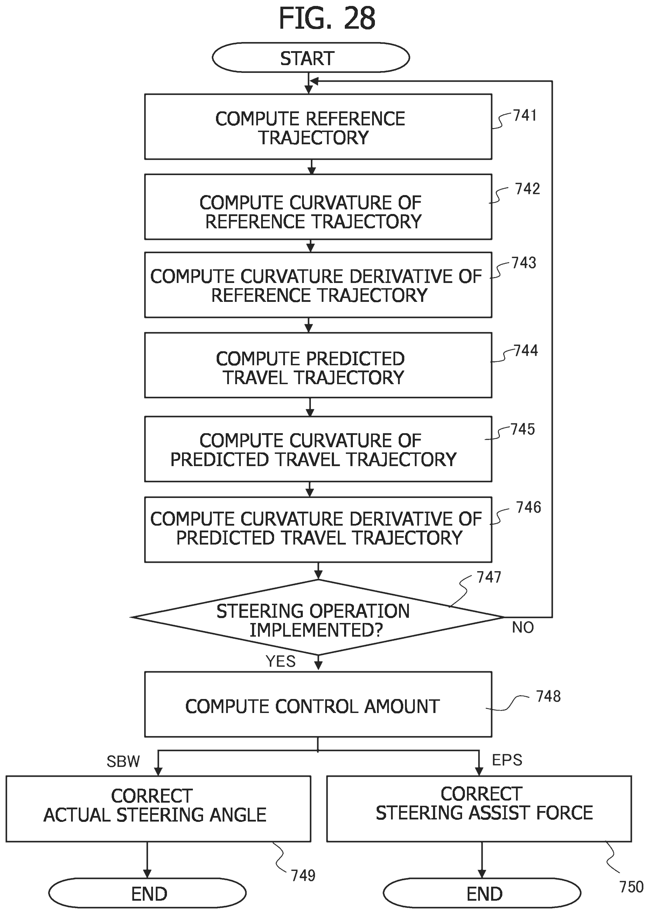

The flowchart in FIG. 28 illustrates a control process of the fifth steering-angle assist pattern for assisting the steering angle depending on the difference between the derivative value of the curvature of the reference trajectory and the derivative value of the curvature of the predicted travel trajectory.

At Step S741, vehicle control device 500 generates the reference trajectory.

Next, at Step S742, vehicle control device 500 determines the curvature (steering angle) of the reference trajectory.

Then, at Step S743, vehicle control device 500 determines the derivative value (steering angular speed) of the curvature of the reference trajectory.

Next, at Step S744, vehicle control device 500 determines the predicted travel trajectory of vehicle 10.

Then, at Step S745, vehicle control device 500 computes the curvature (steering angle) of the predicted travel trajectory.

Furthermore, at Step S746, vehicle control device 500 determines the derivative value (steering angular speed) of the curvature of the predicted travel trajectory.

Next, at Step S747, vehicle control device 500 determines whether or not the driver is implementing a steering operation.

Here, in a case in which the driver is not implementing a steering operation, vehicle control device 500 returns to Step S741 without implementing assist control.

On the other hand, in a case in which the driver is implementing a steering operation, vehicle control device 500 proceeds to Step S748.

At Step S748, vehicle control device 500 determines a steering-angle assist amount on the basis of the difference between the derivative value of the curvature (steering angle) of the reference trajectory and the derivative value of the curvature (steering angle) of the predicted travel trajectory.

Then, vehicle control device 500 proceeds to Step S749 if steering device 610 is the steer-by-wire system and proceeds to Step S750 if steering device 610 is the electric power steering device.

At Step S749, vehicle control device 500 causes the actual steering angle of the steered road wheels (front wheels 11 and 12) in the steer-by-wire system to reflect the assist amount (steering angle correction amount) determined at Step S748.

That is, in a case in which steering device 610 is the steer-by-wire system, vehicle control device 500 corrects the actual steering angle with a correction amount depending on the difference between the derivative value of the curvature (steering angle) of the reference trajectory and the derivative value of the curvature (steering angle) of the predicted travel trajectory to thereby cause the derivative value of the curvature (steering angle) of the predicted travel trajectory to approach the derivative value of the curvature (steering angle) of the reference trajectory.

In addition, at Step S750, vehicle control device 500 causes the steering assist force in the electric power steering device to reflect the assist amount (steering assist force correction amount) determined at Step S748.

That is, in a case in which steering device 610 is the electric power steering device, vehicle control device 500 corrects the steering assist force with a correction amount depending on the difference between the derivative value of the curvature (steering angle) of the reference trajectory and the derivative value of the curvature (steering angle) of the predicted travel trajectory to thereby cause the curvature (steering angle) of the predicted travel trajectory to approach the derivative value of the curvature (steering angle) of the reference trajectory.

Specifically, vehicle control device 500 strengthens the steering assist force in a case in which the derivative value of the curvature (steering angle) of the reference trajectory is greater than the derivative value of the curvature (steering angle) of the predicted travel trajectory, and in contrast, weakens the steering assist force in a case in which the derivative value of the curvature (steering angle) of the reference trajectory is smaller than the derivative value of the curvature (steering angle) of the predicted travel trajectory.

Hereinbelow, derived control processes of the first steering-angle assist pattern mentioned before, that is, a steering-angle assist pattern to assist the steering angle depending on the difference between the position of the reference trajectory and the position of the predicted travel trajectory, are explained.

"First Derived Form of First Steering-Angle Assist Pattern"

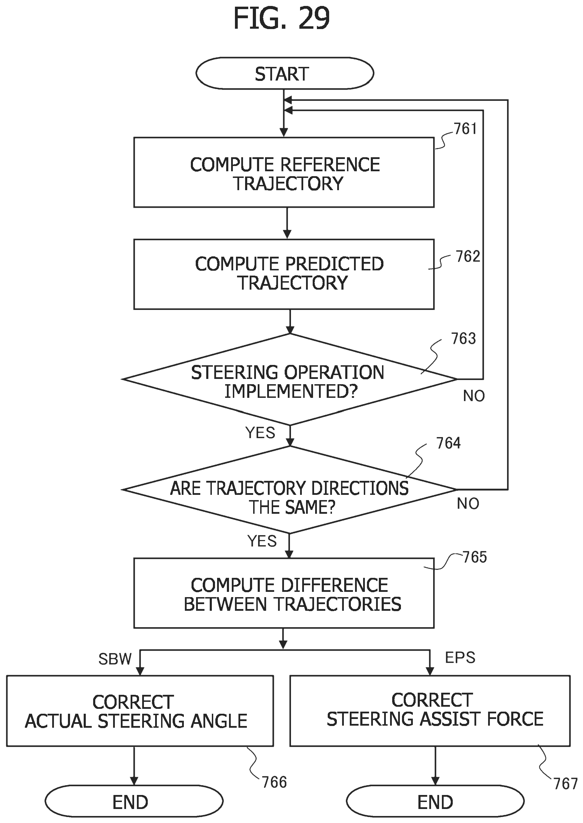

FIG. 29 is a flowchart illustrating a first example of the derived control processes of the first steering-angle assist pattern.

The control process illustrated in FIG. 29 is different from the basic control process of the first steering-angle assist pattern illustrated in the flowchart in FIG. 8 in that the control process illustrated in FIG. 29 additionally handles a case in which the direction in which the reference trajectory is headed and the steering direction of the driver are opposite directions.

Note that, since processes performed at Step S761 to Step S763, Step S765, Step S766, and Step S767 in the flowchart in FIG. 29 are similar to the processes performed at Step S701 to Step S706 in the flowchart in FIG. 8, detailed explanation thereof is omitted here.

When it is determined that the driver is implementing a steering operation after the reference trajectory and the predicted travel trajectory are determined, vehicle control device 500 proceeds to Step S764.

At Step S764, vehicle control device 500 determines whether or not the steering direction along the reference trajectory and the steering direction along the predicted travel trajectory at a position located a predetermined distance ahead of vehicle 10 are the same direction.

Then, when the steering direction along the reference trajectory and the steering direction along the predicted travel trajectory are the same direction, vehicle control device 500 proceeds to Step S765 and the subsequent steps and implements steering assist control.

On the other hand, when the steering direction along the reference trajectory is opposite to the steering direction along the predicted travel trajectory, vehicle control device 500 returns to Step S761 to thereby refrain from implementation of steering assist control (i.e. make a steering assist amount zero).

That is, in a case in which the steering direction along the reference trajectory and the steering direction along the predicted travel trajectory are opposite directions, a steering operation by the driver is given priority, and control to cause the predicted travel trajectory to approach the reference trajectory is cancelled.

"Second Derived Form of First Steering-Angle Assist Pattern"

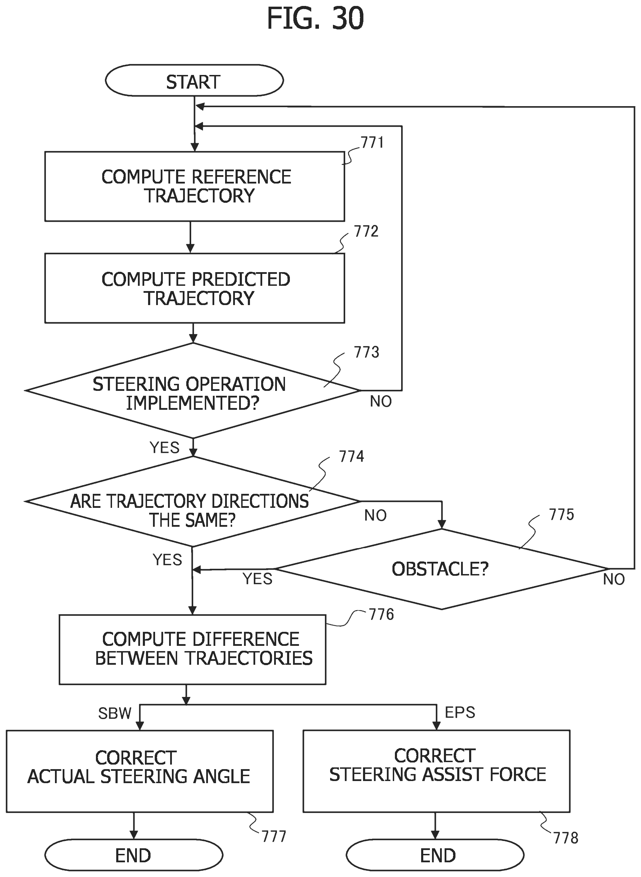

The flowchart in FIG. 30 illustrates a second example of the derived control processes of the first steering-angle assist pattern.

The control process illustrated in FIG. 30 is different from the basic control process of the first steering-angle assist pattern illustrated in the flowchart in FIG. 8 in that the control process illustrated in FIG. 30 additionally handles a case in which the direction in which the reference trajectory is headed and the steering direction of the driver are opposite directions and further differs from the control process illustrated in the flowchart in FIG. 29 in that the control process illustrated in FIG. 30 implements assist control to give priority to safety in a case in which there is an obstacle.

Note that, since processes performed at Step S771 to Step S773, Step S776, Step S777, and Step S778 in the flowchart in FIG. 30 are similar to the processes performed at Step S701 to Step S706 in the flowchart in FIG. 8, detailed explanation thereof is omitted here.

When it is determined that the driver is implementing a steering operation after the reference trajectory and the predicted travel trajectory are determined, vehicle control device 500 proceeds to Step S774.

At Step S774, vehicle control device 500 determines whether or not the steering direction along the reference trajectory and the steering direction along the predicted travel trajectory at a position located a first predetermined distance ahead of vehicle 10 are the same direction.

Then, when the steering direction along the reference trajectory and the steering direction along the predicted travel trajectory are the same direction, vehicle control device 500 proceeds to Step S776 and the subsequent steps and executes steering assist control.

On the other hand, when the steering direction along the reference trajectory and the steering direction along the predicted travel trajectory are opposite directions, vehicle control device 500 proceeds to Step S775.

At Step S775, vehicle control device 500 determines whether or not an obstacle that obstructs the travel of vehicle 10 when vehicle 10 travels along the predicted travel trajectory has been sensed on the predicted travel trajectory at a position located a second predetermined distance ahead of vehicle 10.

Here, in a case in which there is no obstacle on the predicted travel trajectory, vehicle control device 500 returns to Step S771 and refrains from implementation of steering assist control (i.e., makes a steering assist amount zero).

That is, in a case in which there is no obstacle on the predicted travel trajectory, even when the steering direction along the reference trajectory and the steering direction along the predicted travel trajectory are opposite directions, vehicle control device 500 gives priority to a steering operation by the driver and causes vehicle 10 to travel along a path according to the steering operation by the driver.

On the other hand, in a case in which there is an obstacle on the predicted travel trajectory, vehicle control device 500 proceeds to Step S776 and the subsequent steps and implements steering assist control to thereby cause the trajectory along which vehicle 10 travels to approach the reference trajectory.

That is, in a case in which there is an obstacle on the predicted travel trajectory, there is a possibility that, if vehicle 10 is caused to travel along the trajectory according to a steering operation by the driver, vehicle 10 will contact the obstacle.

In view of this, contrary to the steering intention of the driver, vehicle control device 500 implements assist control to cause the travel trajectory of vehicle 10 to approach the reference trajectory (a route that avoids the obstacle) to thereby give priority to travel safety of vehicle 10.

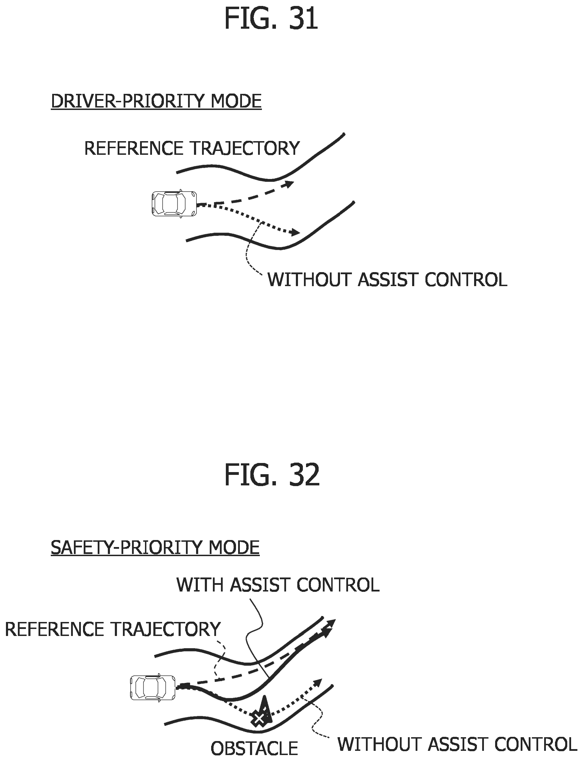

FIG. 31 and FIG. 32 illustrate assist control in a case in which the steering direction along the reference trajectory and the steering direction along the predicted travel trajectory are opposite directions.

FIG. 31 illustrates assist control in a case in which the control process illustrated in the flowchart in FIG. 29 is implemented or the control process illustrated in the flowchart in FIG. 30 is implemented and in which there is no obstacle on the predicted travel trajectory, that is, assist control (driver-priority mode) to give priority to the driver.

At this time, even when the steering direction along the reference trajectory and the steering direction along the predicted travel trajectory are opposite directions, vehicle control device 500 cancels assist control to cause the travel trajectory of vehicle 10 to approach the reference trajectory, that is, makes a steering-angle assist amount zero, and avoids assist in a direction that differs from the steering intention of the driver.

On the other hand, FIG. 32 illustrates assist control (i.e., safety-priority assist control, safety-priority mode) in a case in which the control process illustrated in the flowchart in FIG. 30 is implemented and there is an obstacle on the predicted travel trajectory.

At this time, since there is an obstacle on the predicted travel trajectory, the intervention by assist control causes the travel trajectory of vehicle 10 to approach the reference trajectory to avoid the obstacle to thereby inhibit vehicle 10 from contacting the obstacle.

Note that the assist control (driver-priority mode) illustrated in the flowchart in FIG. 29 and the assist control (safety-priority mode) illustrated in FIG. 30 may be switchable as desired, and for example, the driver may be allowed to select either the driver-priority mode or the safety-priority mode by a switch operation.

"Third Derived Form of First Steering-Angle Assist Pattern"

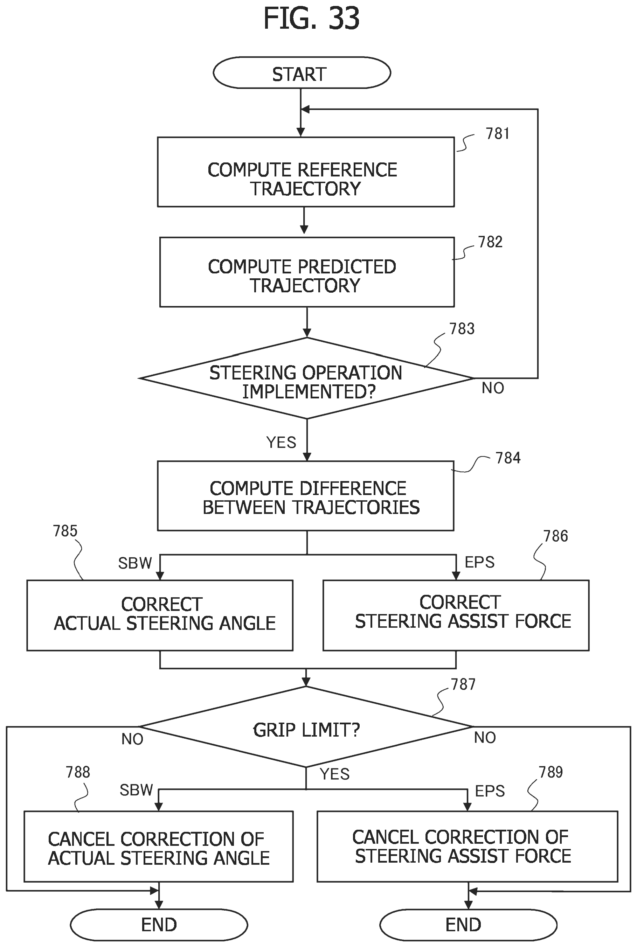

The flowchart in FIG. 33 illustrates a third example of the derived control processes of the first steering-angle assist pattern.

In the third example, a process of inhibiting assist, specifically a process of making an assist amount zero or a process of reducing an assist amount, when the tire grip force exceeds its limit (i.e., the tire force becomes saturated) is added to the basic control process of the first steering-angle assist pattern illustrated in the flowchart in FIG. 8.

Note that, since processes performed at Step S781 to Step S786 in the flowchart in FIG. 33 are similar to the processes performed at Step S701 to Step S706 in the flowchart in FIG. 8, detailed explanation thereof is omitted here.

Vehicle control device 500 implements, at Step S781 to Step S786, a process of causing the actual steering angle or steering assist force of the steered road wheels (front wheels 11 and 12) to reflect an assist amount based on the positional deviation between the reference trajectory and the predicted travel trajectory and then proceeds to Step S787.

At Step S787, vehicle control device 500 determines whether or not the tire force becomes saturated in a state in which assist control is implemented, specifically, whether or not the tire grip force is about to exceed its limit or whether or not the tire grip force has exceeded its limit, on the basis of the longitudinal force and lateral force (cornering force) of the tires.

When it is determined at Step S787 that the tire force becomes saturated, vehicle control device 500 proceeds to Step S788 if steering device 610 is the steer-by-wire system and proceeds to Step S789 if steering device 610 is the electric power steering device.

At Step S788 or Step S789, vehicle control device 500 performs a process (hereinbelow, referred to as an assist amount reduction process) of cancelling the reflection of the assist amount based on the positional deviation between the reference trajectory and the predicted travel trajectory, that is, making the assist amount zero or correcting the assist amount to a value closer to zero than the assist amount set at Step S784 is.

That is, vehicle control device 500 adjusts the assist amount such that the tire force does not become saturated (i.e., the tire grip force does not exceed its limit) due to steering assist control.

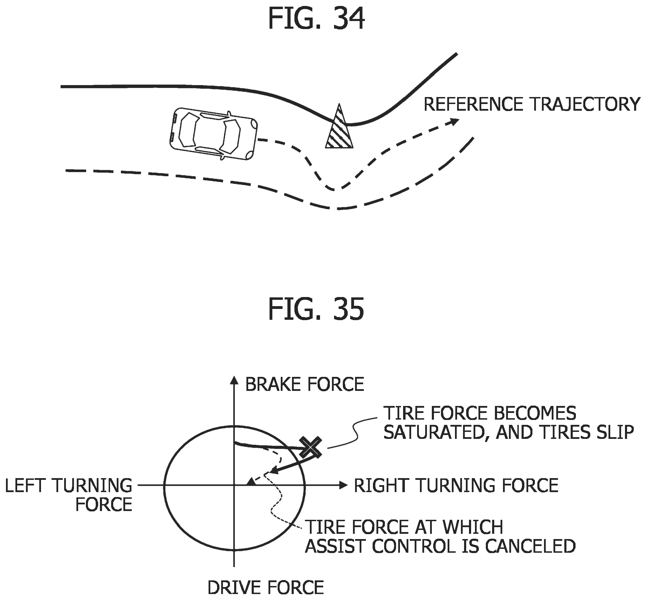

Here, the operation of the assist control illustrated in the flowchart in FIG. 33 is explained with reference to FIG. 34 and FIG. 35.

FIG. 34 illustrates the reference trajectory set such that an obstacle is avoided on a curved road in which there is the obstacle.

Then, FIG. 35 illustrates a tire friction circle in which the vertical axis represents the tire longitudinal force (brake force or drive force), and the horizontal axis represents the cornering force (lateral turning force) and illustrates the tire grip force in a case in which vehicle 10 travels along the reference trajectory and the tire grip force in a case in which a process of cancelling steering assist control to make an assist amount zero is performed.

Here, the reference trajectory is a trajectory that causes the tire grip force to exceed its limit due to an abrupt right turn for avoiding the obstacle.

In view of this, in a case in which the tire grip force exceeds its limit due to control to cause the travel trajectory of vehicle 10 to approach the reference trajectory, vehicle control device 500 performs a process of making the assist amount zero or reducing the assist amount to thereby inhibit the occurrence of tire slip due to assist control.

Next, derived control processes of the second steering-angle assist pattern mentioned before, that is, a steering-angle assist pattern to assist the steering angle depending on the curvature of the reference trajectory, are explained.

"First Derived Form of Second Steering-Angle Assist Pattern"

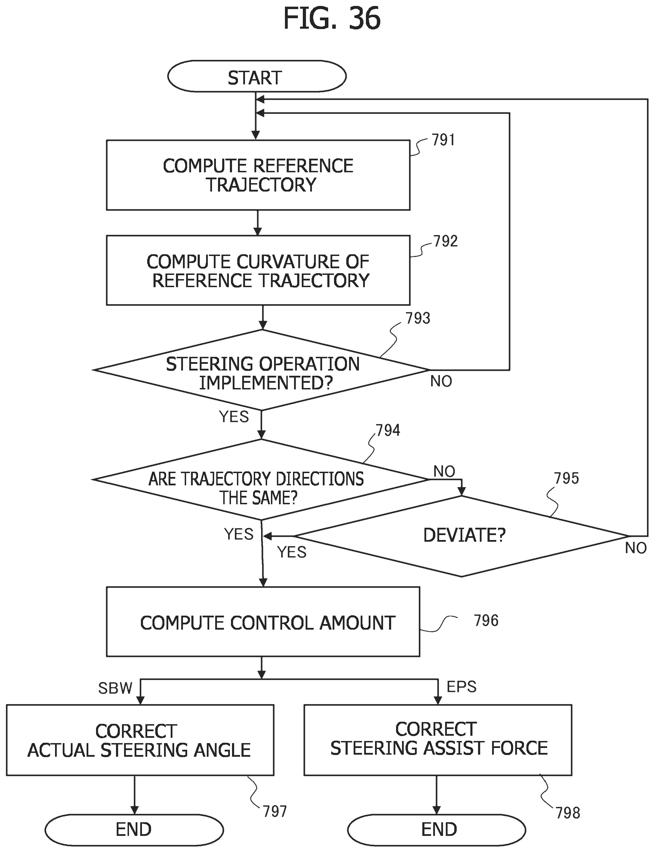

FIG. 36 is a flowchart illustrating a first example of the derived control processes of the second steering-angle assist pattern, and the control process is different from the basic control process of the second steering-angle assist pattern illustrated in the flowchart in FIG. 17 in that the control process illustrated in FIG. 36 additionally handles a case in which the direction in which the reference trajectory is headed and the steering direction of the driver are opposite directions.

Vehicle control device 500 generates the reference trajectory at Step S791 and computes the predicted travel trajectory of vehicle 10 at Step S792.

Then, at Step S793, vehicle control device 500 determines whether or not the driver is implementing a steering operation and proceeds to Step S794 if the driver is implementing a steering operation.

At Step S794, vehicle control device 500 determines whether or not the steering direction along the reference trajectory and the steering direction along the predicted travel trajectory at a position located the first predetermined distance ahead of vehicle 10 are the same direction.

Then, when the steering direction along the reference trajectory and the steering direction along the predicted travel trajectory are the same direction, vehicle control device 500 proceeds to Step S796 to Step S798, and as in Step S714 to Step S716 in the flowchart in FIG. 17, implements assist control based on the curvature of the reference trajectory.

On the other hand, when the steering direction along the reference trajectory and the steering direction along the predicted travel trajectory are opposite directions, vehicle control device 500 proceeds to Step S795.

At Step S795, vehicle control device 500 determines whether or not the predicted travel trajectory is likely to deviate from the travelable area along the reference trajectory.

Here, in a case in which the predicted travel trajectory passes through the travelable area and does not deviate from the travelable area, vehicle control device 500 returns to Step S791 without implementing assist control to thereby give priority to a steering operation by the driver.

On the other hand, in a case in which the predicted travel trajectory is likely to deviate from the travelable area, vehicle control device 500 proceeds to Step S796 and the subsequent steps and implements assist control based on the curvature of the reference trajectory.

That is, vehicle control device 500 proceeds to Step S796 and the subsequent steps from Step S795 to thereby cause the trajectory of vehicle 10 to approach the reference trajectory such that vehicle 10 travels on the inner side of the travelable area.

In this manner, in a case in which the predicted travel trajectory is likely to deviate from the travelable area, even if the direction differs from the direction of the steering operation by the driver, vehicle control device 500 causes the curvature of the predicted travel trajectory to approach the curvature of the reference trajectory to thereby guide vehicle 10 to travel within the travelable area and give priority to the safe travel of vehicle 10.

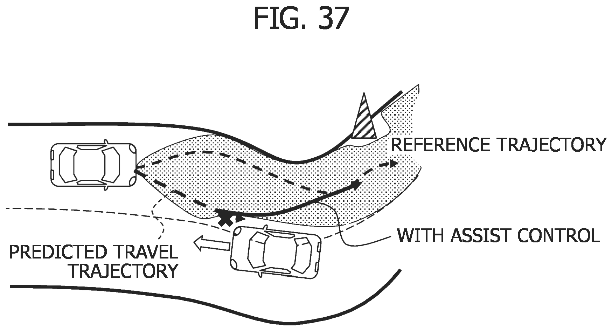

FIG. 37 is a drawing for explaining the operational function of the steering-angle assist pattern illustrated in the flowchart in FIG. 36.

The state illustrated in FIG. 37 is a state in which the turning direction of the reference trajectory and the turning direction of the predicted travel trajectory are opposite directions, and it is predicted that travel of vehicle 10 along the predicted travel trajectory deviates from the travelable area.

In this case, even if the turning direction of the reference trajectory and the turning direction of the predicted travel trajectory are opposite directions, vehicle control device 500 executes assist control to cause the predicted travel trajectory to approach the reference trajectory to thereby execute assist to cause vehicle 10 to pass through the travelable area.

In contrast, even in a case in which the turning direction of the reference trajectory and the turning direction of the predicted travel trajectory are opposite directions, vehicle control device 500 cancels assist control, that is, makes an assist amount zero provided that it is predicted that vehicle 10 will pass through the travelable area.

Next, brake-force and drive-force assist control performed by vehicle control device 500 is explained in detail.

Vehicle control device 500 may create the target vehicle speed for brake-force and drive-force assist control using either of the following two patterns, for example.

First target-vehicle-speed creation pattern: The target vehicle speed is created on the basis of the curvature of the reference trajectory.

Second target-vehicle-speed creation pattern: The target vehicle speed is created on the basis of the derivative value of the curvature of the reference trajectory.

"First Target-Vehicle-Speed Creation Pattern"

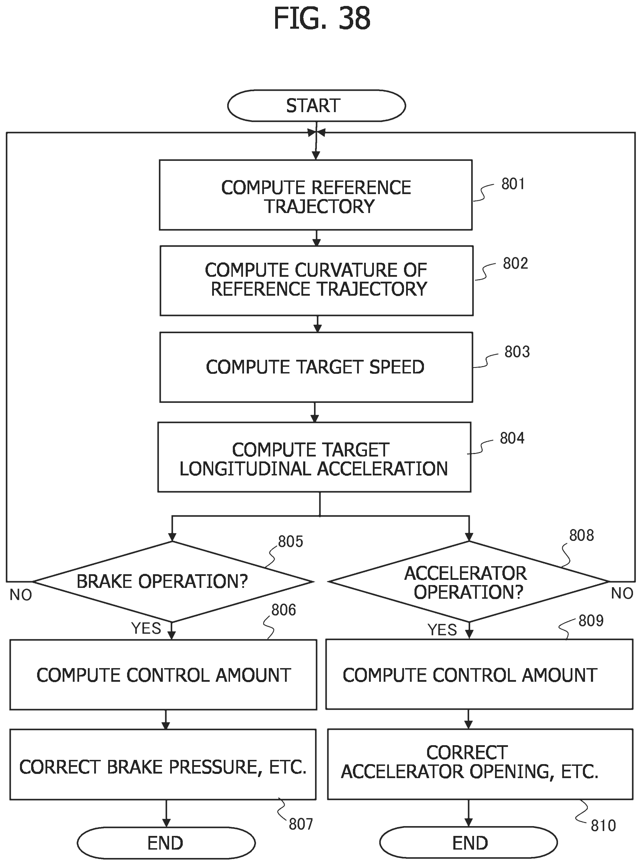

The flowchart in FIG. 38 illustrates a brake-force and drive-force assist pattern that adopts the first target-vehicle-speed creation pattern and sets a brake-force and drive-force assist amount on the basis of the magnitude of the target longitudinal acceleration.

Vehicle control device 500 generates the reference trajectory at Step S801 and computes the curvature of the reference trajectory at Step S802.

Furthermore, at Step S803, vehicle control device 500 determines the target vehicle speed in the travel of vehicle 10 on the basis of the curvature of the reference trajectory.

Then, at the next Step S804, vehicle control device 500 differentiates the target vehicle speed and determines the target longitudinal acceleration.

After determining the target longitudinal acceleration, at Step S805, vehicle control device 500 determines whether or not the driver is operating the brake pedal, that is, whether or not the driver is implementing a brake operation.

When the driver is not operating the brake pedal, vehicle control device 500 returns to Step S801 to thereby cancel brake-force assist control.

On the other hand, when the driver is operating the brake pedal, vehicle control device 500 proceeds to Step S806 and determines a brake-force assist amount on the basis of the target longitudinal acceleration.

Then, at the next Step S807, vehicle control device 500 causes the brake force generated by braking device 630 to reflect the assist amount.

That is, at Step S807, vehicle control device 500 causes brake fluid pressure, regenerative brake force, electric caliper pressing force, and the like to reflect the assist amount.

In addition, after determining the target longitudinal acceleration, at Step S808, vehicle control device 500 determines whether or not the driver is operating the accelerator pedal, that is, whether or not the driver is implementing an accelerator operation.

When the driver is not operating the accelerator pedal, vehicle control device 500 returns to Step S801 to thereby cancel drive-force assist control.

On the other hand, when the driver is operating the accelerator pedal, vehicle control device 500 proceeds to Step S809 and determines a drive-force assist amount on the basis of the target longitudinal acceleration.

Then, at the next Step S810, vehicle control device 500 causes the drive force generated by driving device 620 to reflect the assist amount.

That is, at Step S810, vehicle control device 500 causes accelerator opening, motor torque, engine torque, and the like to reflect the assist amount.

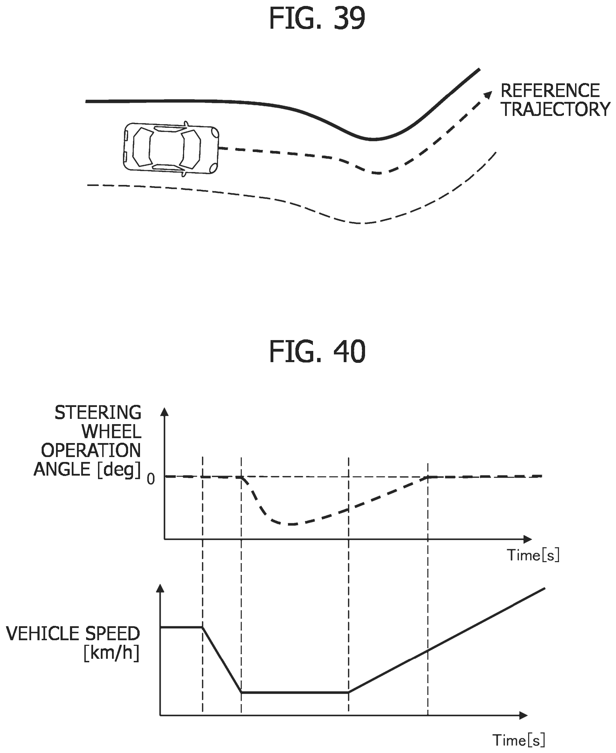

FIG. 39 illustrates an example of the reference trajectory generated for a curved road, and FIG. 40 illustrates examples of the steering angle and the target vehicle speed corresponding to the curvature of the reference trajectory in FIG. 39.

As illustrated in FIG. 39 and FIG. 40, vehicle control device 500 may set the target vehicle speed such that deceleration starts before the reference trajectory turns, that is, before the curve, and acceleration starts before vehicle 10 has exited the curve (i.e. before the reference trajectory becomes a straight line).

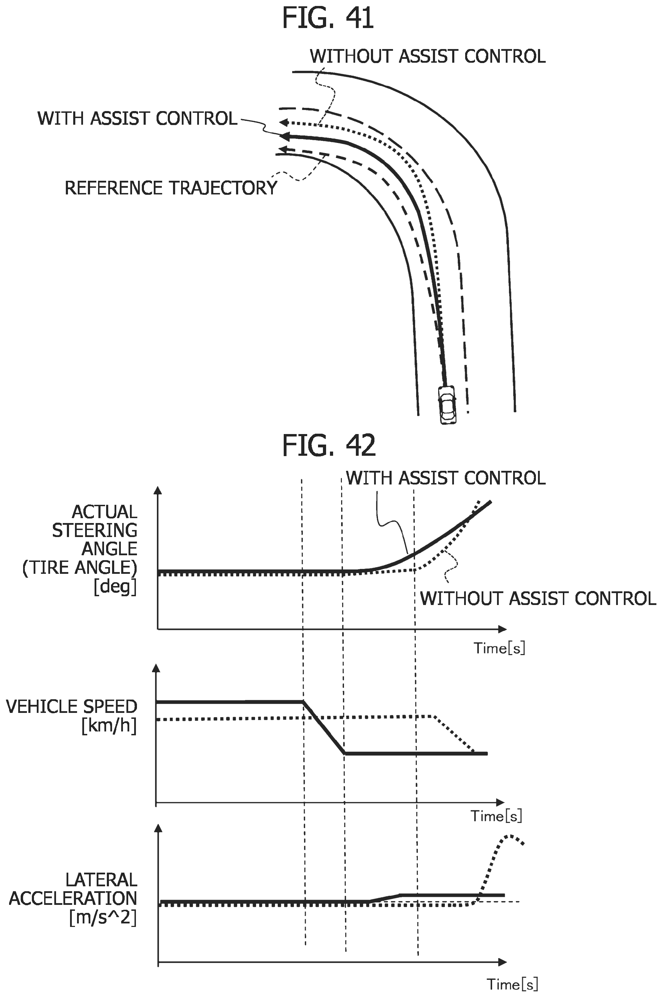

In addition, FIG. 41 illustrates the travel trajectory in a case in which assist control of the steering angle is implemented using the first steering-angle assist pattern, and assist control of the brake force illustrated in FIG. 38 is implemented.

Furthermore, FIG. 42 is a time chart illustrating the differences in actual steering angle, vehicle speed, and lateral acceleration depending on whether or not assist control is implemented.

Since the start timing of a steering operation by the driver before the curve is late in the travel without assist control as in the examples illustrated in FIG. 41 and FIG. 42, vehicle 10 deviates almost to the opposite lane, which leads to sudden steering and generates a large lateral acceleration.

In addition, since vehicle 10 enters the curve without decelerating before the curve in the travel without assist control, unnecessary lateral acceleration is generated.

In contrast, since the steering is assisted depending on the difference between the position of the reference trajectory and the position of the predicted travel trajectory, and the target vehicle speed is set on the basis of the curvature of the reference trajectory in a case in which assist control is implemented, even if the start timing of the steering operation by the driver before the curve is late, vehicle 10 can enter the curve along a trajectory suitable for cornering.

Furthermore, since vehicle 10 is decelerated to an appropriate speed before the curve in a case in which assist control is implemented, the generation of unnecessary lateral acceleration is inhibited.

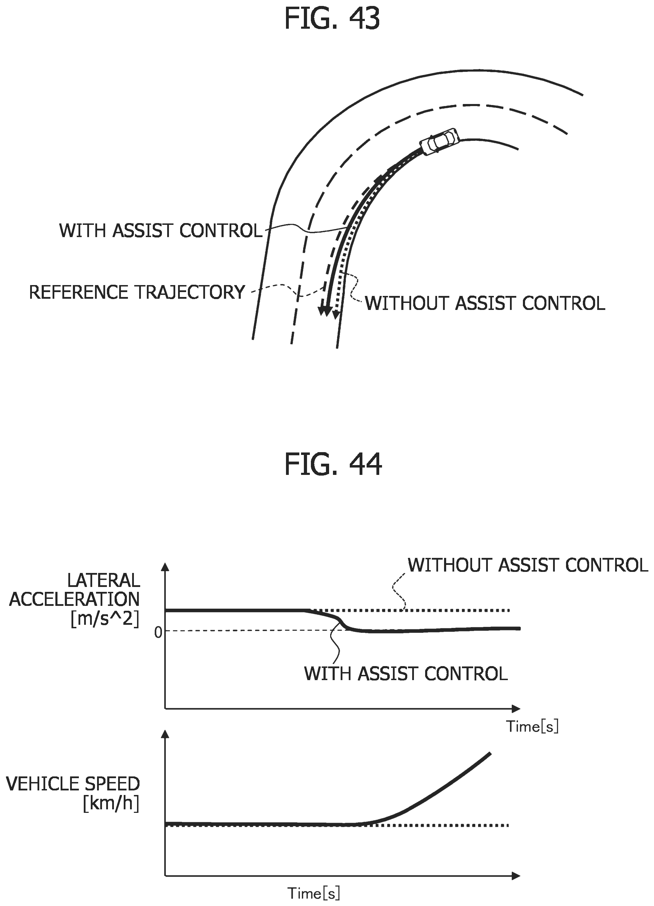

In addition, FIG. 43 illustrates the travel trajectory at the curve exit in a case in which assist control of the steering angle is implemented using the first steering-angle assist pattern, and assist control of the brake force illustrated in FIG. 38 is implemented.

Furthermore, FIG. 44 is a time chart illustrating the differences in lateral acceleration and vehicle speed depending on whether or not assist control is implemented.

Since vehicle 10 is not accelerated even after vehicle 10 has exited the curve in the travel without assist control at the curve exit illustrated in FIG. 43 and FIG. 44, vehicle 10 undesirably slows at the curve. In addition, vehicle 10 travels on the inner side of the curve even at the curve exit, the turning is sharp, and generation of lateral acceleration of vehicle 10 undesirably increases.

In contrast, in a case in which assist control is implemented, vehicle 10 can be inhibited from being slower at the curve since vehicle 10 starts acceleration at the end of the curve, and generation of lateral acceleration of vehicle 10 can be inhibited since vehicle 10 travels along a line on the outer side of the lane at the curve exit.

"Second Target-Vehicle-Speed Creation Pattern"

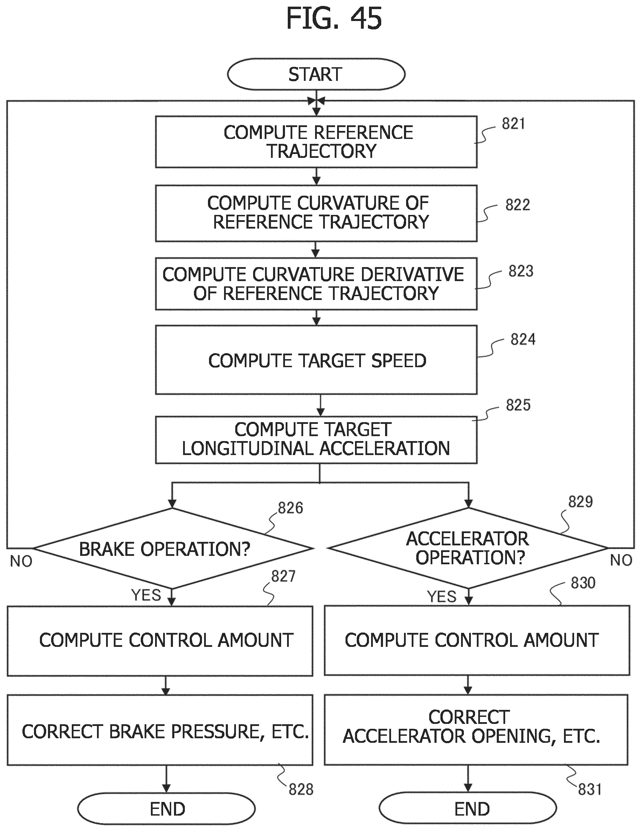

The flowchart in FIG. 45 illustrates a control pattern that adopts the second target-vehicle-speed creation pattern in which the target vehicle speed is created on the basis of the derivative value of the curvature of the reference trajectory and sets a brake-force and drive-force assist amount on the basis of the magnitude of the target longitudinal acceleration.

Vehicle control device 500 generates the reference trajectory at Step S821 and computes the curvature of the reference trajectory at Step S822.

Furthermore, at Step S823, vehicle control device 500 computes the derivative value of the curvature of the reference trajectory.

Then, vehicle control device 500 determines the target vehicle speed in the travel of vehicle 10 on the basis of the derivative value of the curvature of the reference trajectory at Step S824 and determines the target longitudinal acceleration by differentiating the target vehicle speed at the next Step S825.

Since processes at Step S826 to Step S831 thereafter, are the same as the processes at Step S805 to Step S810 in the flowchart in FIG. 38, detailed explanation thereof is omitted here.

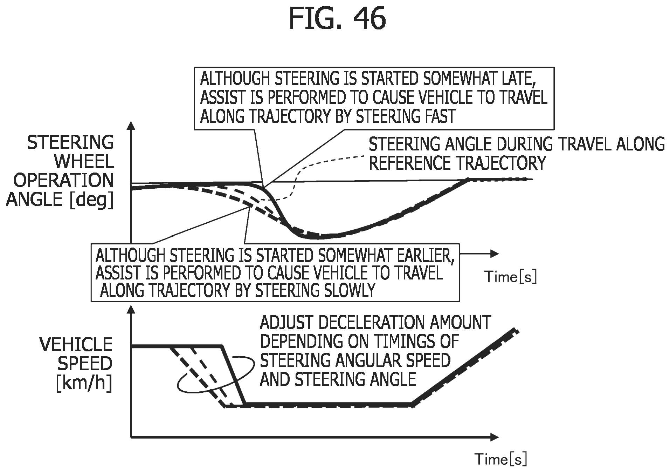

FIG. 46 is a time chart illustrating the state in which, in travel through a curve like the one illustrated in FIG. 39, the deceleration amount before the curve is made changeable depending on the derivative value (steering angular speed) of the curvature and the steering timing.

Note that FIG. 46 illustrates examples of a case in which assist control is performed such that vehicle 10 travels along a trajectory by steering fast although the start of the steering is late, a case in which, in contrast, assist control is performed such that vehicle 10 travels along a trajectory with a slow steering speed although the start of the steering is early, and intermediate assist control characteristics between these cases.

Here, vehicle control device 500 makes the deceleration amount before the curve changeable depending on the derivative value (steering angular speed) of the curvature and the steering timing, in accordance with steering assist control.

That is, in the case in which assist control is performed such that vehicle 10 travels along a trajectory by steering fast although the start of the steering is late, the timing of the deceleration start before the curve also is late, and the acceleration of the deceleration (negative acceleration) is more rapid.

In contrast, in the case in which assist control is performed such that vehicle 10 travels along a trajectory with a slow steering speed although the start of the steering is early, the timing of the deceleration start before the curve also is earlier, and the acceleration of the deceleration is slower.

Next, a control pattern in which a brake-force and drive-force assist amount is determined on the basis of the target speed (i.e., a reference speed as the reference information) is explained.

Note that, as mentioned before, patterns of creating the target speed include patterns in which the target speed is created on the basis of the curvature of the reference trajectory and patterns in which the target speed is created on the basis of the derivative value of the curvature of the reference trajectory.

As a control pattern for determining a brake-force and drive-force assist amount on the basis of the target speed, for example, vehicle control device 500 may adopt any of the following five types of pattern.

First brake assist and drive assist pattern: The brake force and drive force are assisted depending on the difference between the target speed and a vehicle speed (hereinbelow, a predicted vehicle speed) predicted for the predicted travel trajectory.

Second brake assist and drive assist pattern: The brake force and drive force are assisted depending on the acceleration of the target vehicle speed.

Third brake assist and drive assist pattern: The brake force and drive force are assisted depending on the jerk (the derivative value of the acceleration) of the target vehicle speed.

Fourth brake assist and drive assist pattern: The brake force and drive force are assisted depending on the difference between the acceleration of the target vehicle speed and the acceleration of the predicted vehicle speed.

Fifth brake assist and drive assist pattern: The brake force and drive force are assisted depending on the difference between the jerk of the target vehicle speed and the jerk of the predicted vehicle speed.

Here, since the first brake assist and drive assist pattern, the fourth brake assist and drive assist pattern, and the fifth brake assist and drive assist pattern use the predicted travel trajectory (predicted driving states including vehicle speed, acceleration, and jerk), these are brake assist and drive assist patterns that can be implemented with vehicle control device 500 illustrated in FIG. 3.

On the other hand, since the second brake assist and drive assist pattern and the third brake assist and drive assist pattern do not use the predicted travel trajectory (predicted driving state), these are brake assist and drive assist patterns that can be implemented with vehicle control device 500 illustrated in FIG. 2.

Hereinbelow, processing content of each brake assist and drive assist pattern is explained in detail.

"First Brake Assist and Drive Assist Pattern"

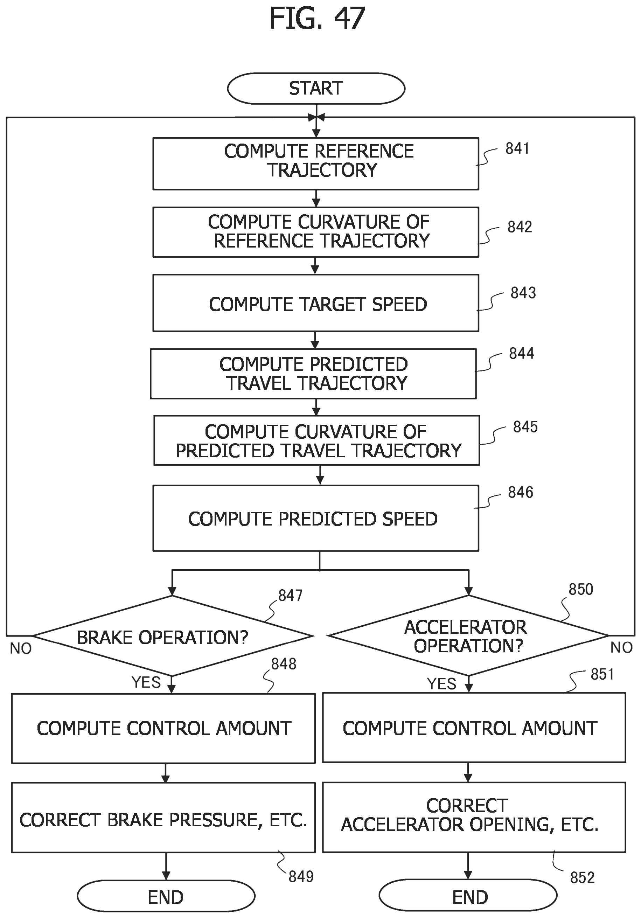

The flowchart in FIG. 47 illustrates a control process of the first brake assist and drive assist pattern for assisting the brake force and drive force depending on the difference between the target speed as the reference information and the predicted vehicle speed.

At Step S841, vehicle control device 500 generates the reference trajectory using the current position of vehicle 10 as a starting point.

Then, vehicle control device 500 computes the curvature of the reference trajectory at Step S842 and computes the target speed on the basis of the curvature of the reference trajectory at the next Step S843.

In addition, vehicle control device 500 computes the predicted travel trajectory at Step S844 and computes the curvature of the predicted travel trajectory at Step S845.

Furthermore, at Step S846, vehicle control device 500 computes the predicted vehicle speed on the basis of the curvature of the predicted travel trajectory.

After determining the target speed and the predicted vehicle speed at Step S841 to Step S846, vehicle control device 500 proceeds to Step S847 and determines whether or not the driver is operating the brake pedal.

When the driver is not operating the brake pedal, vehicle control device 500 returns to Step S841 to thereby cancel brake-force assist control.

On the other hand, when the driver is operating the brake pedal, vehicle control device 500 proceeds to Step S848 and determines a brake-force assist amount on the basis of the difference between the target speed and the predicted vehicle speed.

For example, when the predicted vehicle speed is faster than the target speed, as the predicted vehicle speed increases, vehicle control device 500 increases the assist amount so as to increase the brake force.

Then, at the next Step S849, vehicle control device 500 causes the brake force generated by braking device 630 to reflect the assist amount.

In addition, after determining the target speed and the predicted vehicle speed at Step S841 to Step S846, at Step S850, vehicle control device 500 determines whether or not the driver is operating the accelerator pedal.

When the driver is not operating the accelerator pedal, vehicle control device 500 returns to Step S841 to thereby cancel drive-force assist control.

On the other hand, when the driver is operating the accelerator pedal, vehicle control device 500 proceeds to Step S851 and determines a drive-force assist amount on the basis of the difference between the target speed and the predicted vehicle speed.

For example, when the predicted vehicle speed is slower than the target speed, as the predicted vehicle speed decreases, vehicle control device 500 increases the assist amount so as to increase the drive force.

Then, at the next Step S852, vehicle control device 500 causes the drive force generated by driving device 620 to reflect the assist amount.

"Second Brake Assist and Drive Assist Pattern"

The control process illustrated in the flowchart in FIG. 38 explained earlier as a creation pattern for the target vehicle speed is equivalent to the second brake assist and drive assist pattern for assisting the brake force and drive force depending on the acceleration of the target vehicle speed, which is the reference information.

Accordingly, since the flowchart in FIG. 38 illustrates the control process of the second brake assist and drive assist pattern for assisting the brake force and drive force depending on the acceleration of the target vehicle speed, detailed explanation thereof is omitted here.

"Third Brake Assist and Drive Assist Pattern"

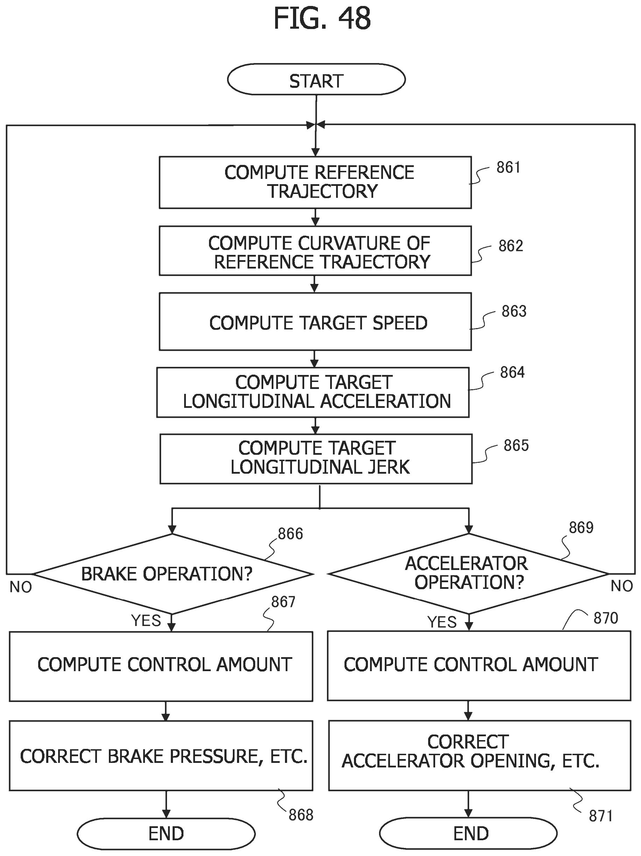

The flowchart in FIG. 48 illustrates a control process of the third brake assist and drive assist pattern for assisting the brake force and drive force depending on the jerk (target longitudinal jerk) of the target vehicle speed, which is the reference information.

Here, since processes from the generation of the reference trajectory to the determination of the target longitudinal acceleration at Step S861 to Step S864 in the flowchart in FIG. 48 are similar to the processes at Step S801 to Step S804 in the flowchart in FIG. 38, detailed explanation thereof is omitted.

After determining the target longitudinal acceleration at Step S864, vehicle control device 500 next proceeds to Step S865 and determines the target longitudinal jerk, which is the time derivative value of the target longitudinal acceleration.

After determining the target longitudinal jerk at Step S865, vehicle control device 500 proceeds to Step S866 and determines whether or not the driver is operating the brake pedal.

When the driver is not operating the brake pedal, vehicle control device 500 returns to Step S861 to thereby cancel brake-force assist control.

On the other hand, when the driver is operating the brake pedal, vehicle control device 500 proceeds to Step S867 and determines a brake-force assist amount on the basis of the target longitudinal jerk.

Here, vehicle control device 500 may determine whether there is a tendency toward strengthened deceleration or toward weakened deceleration on the basis of the target longitudinal jerk, decide to increase or reduce the brake force in brake-force assist control on the basis of results of the determination, and furthermore changeably set the magnitude of an assist amount on the basis of the magnitude of the target longitudinal jerk.

Then, at the next Step S868, vehicle control device 500 causes the brake force generated by braking device 630 to reflect the assist amount.

In addition, after determining the target longitudinal jerk at Step S865, vehicle control device 500 proceeds to Step S869 and determines whether or not the driver is operating the accelerator pedal.

When the driver is not operating the accelerator pedal, vehicle control device 500 returns to Step S861 to thereby cancel drive-force assist control.

On the other hand, when the driver is operating the accelerator pedal, vehicle control device 500 proceeds to Step S870 and determines a drive-force assist amount on the basis of the target longitudinal jerk.

Here, vehicle control device 500 may determine whether there is a tendency toward strengthened acceleration or toward weakened acceleration on the basis of the target longitudinal jerk, decide to increase or reduce the drive force in drive-force assist control on the basis of results of the determination, and furthermore changeably set the magnitude of an assist amount on the basis of the magnitude of the target longitudinal jerk.

Then, at the next Step S871, vehicle control device 500 causes the drive force generated by driving device 620 to reflect the assist amount.

"Fourth Brake Assist and Drive Assist Pattern"

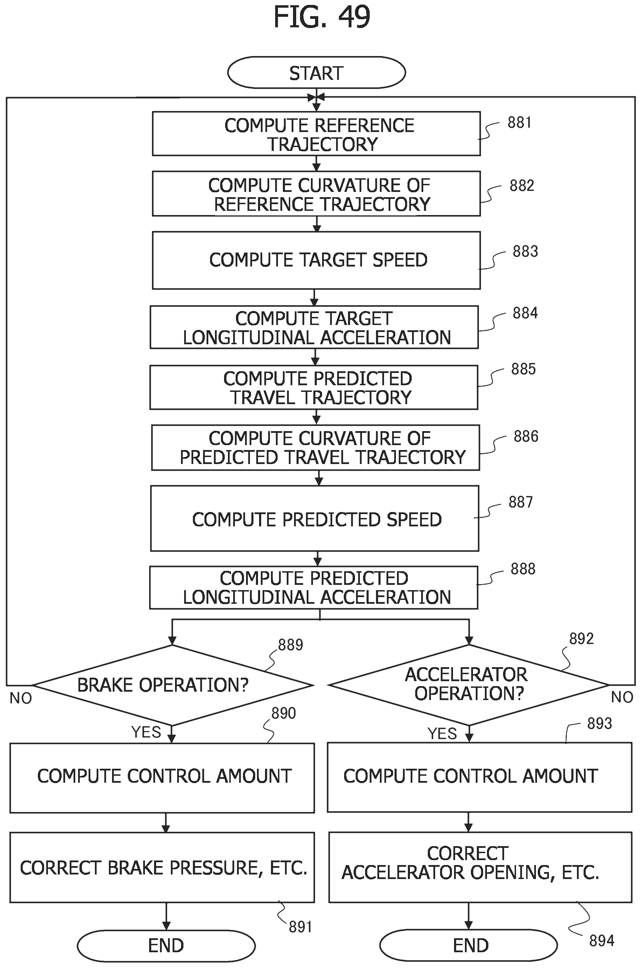

The flowchart in FIG. 49 illustrates a control process of the fourth brake assist and drive assist pattern for assisting the brake force and drive force depending on the difference between the acceleration of the target vehicle speed and the acceleration of the predicted vehicle speed.

At Step S881 to Step S884, vehicle control device 500 determines the target longitudinal acceleration, as in Step S861 to Step S864 in the flowchart in FIG. 48.

In addition, at Step S885 to Step S887, vehicle control device 500 determines the predicted speed, as in Step S844 to Step S846 in the flowchart in FIG. 47.

Then, at Step S888, vehicle control device 500 takes the time derivative of the predicted speed and determines the predicted longitudinal acceleration.

After determining the target longitudinal acceleration and the predicted longitudinal acceleration, vehicle control device 500 proceeds to Step S889 and determines whether or not the driver is operating the brake pedal.

When the driver is not operating the brake pedal, vehicle control device 500 returns to Step S881 to thereby cancel brake-force assist control.

On the other hand, when the driver is operating the brake pedal, vehicle control device 500 proceeds to Step S890 and determines a brake-force assist amount so as to cause the predicted longitudinal acceleration to approach the target longitudinal acceleration on the basis of the difference between the target longitudinal acceleration and the predicted longitudinal acceleration.

Then, at the next Step S891, vehicle control device 500 causes the brake force generated by braking device 630 to reflect the assist amount.

In addition, after determining the target longitudinal acceleration and the predicted longitudinal acceleration, vehicle control device 500 proceeds to Step S892 and determines whether or not the driver is operating the accelerator pedal.

When the driver is not operating the accelerator pedal, vehicle control device 500 returns to Step S881 to thereby cancel drive-force assist control.

On the other hand, when the driver is operating the accelerator pedal, vehicle control device 500 proceeds to Step S893 and determines a drive-force assist amount so as to cause the predicted longitudinal acceleration to approach the target longitudinal acceleration on the basis of the difference between the target longitudinal acceleration and the predicted longitudinal acceleration.

Then, at the next Step S894, vehicle control device 500 causes the drive force generated by driving device 620 to reflect the assist amount.

"Fifth Brake Assist and Drive Assist Pattern"

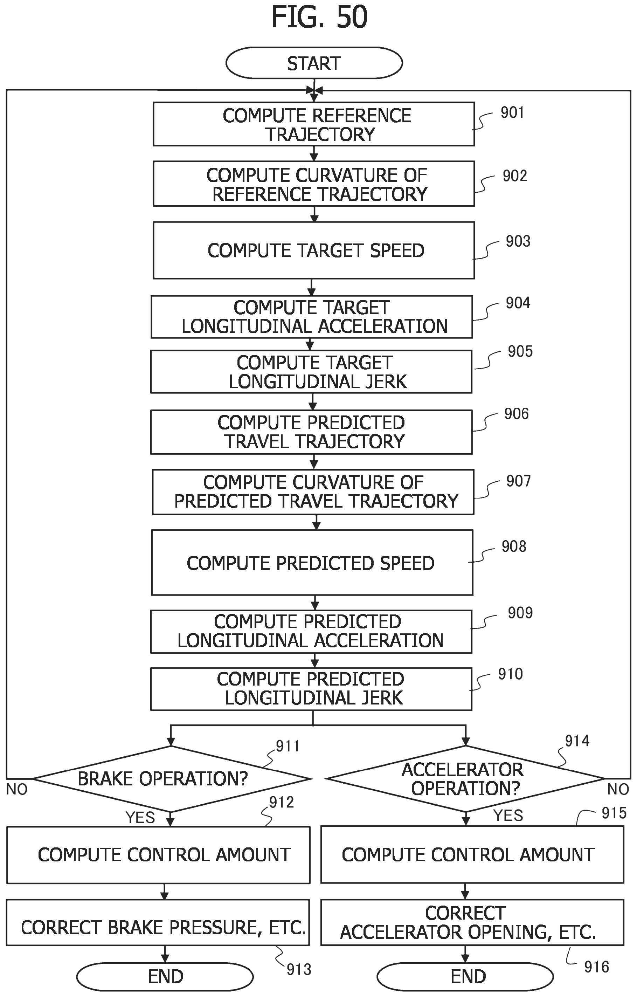

The flowchart in FIG. 50 illustrates a control process of the fifth brake assist and drive assist pattern for assisting the brake force and drive force depending on the difference between the jerk of the target vehicle speed, which is the reference information, and the jerk of the predicted vehicle speed.

At Step S901 to Step S904, vehicle control device 500 determines the target longitudinal acceleration, as in Step S881 to Step S884 in the flowchart in FIG. 49.

Then, at the next Step S905, vehicle control device 500 takes the time derivative of the target longitudinal acceleration and determines the target longitudinal jerk.

In addition, at Step S906 to Step S909, vehicle control device 500 determines the predicted longitudinal acceleration, as in Step S885 to Step S888 in the flowchart in FIG. 49.

Then, at the next Step S910, vehicle control device 500 takes the time derivative of the predicted longitudinal acceleration and determines the predicted longitudinal jerk.

After determining the target longitudinal jerk and the predicted longitudinal jerk, vehicle control device 500 proceeds to Step S911 and determines whether or not the driver is operating the brake pedal.

When the driver is not operating the brake pedal, vehicle control device 500 returns to Step S901 to thereby cancel brake-force assist control.

On the other hand, when the driver is operating the brake pedal, vehicle control device 500 proceeds to Step S912 and determines a brake-force assist amount so as to cause the predicted longitudinal jerk to approach the target longitudinal jerk on the basis of the difference between the target longitudinal jerk and the predicted longitudinal jerk.

Then, at the next Step S913, vehicle control device 500 causes the brake force generated by braking device 630 to reflect the assist amount.

In addition, after determining the target longitudinal jerk and the predicted longitudinal jerk, vehicle control device 500 proceeds to Step S914 and determines whether or not the driver is operating the accelerator pedal.

When the driver is not operating the accelerator pedal, vehicle control device 500 returns to Step S901 to thereby cancel drive-force assist control.

On the other hand, when the driver is operating the accelerator pedal, vehicle control device 500 proceeds to Step S915 and determines a drive-force assist amount so as to cause the predicted longitudinal jerk to approach the target longitudinal jerk on the basis of the difference between the target longitudinal jerk and the predicted longitudinal jerk.

Then, at the next Step S916, vehicle control device 500 causes the drive force generated by driving device 620 to reflect the assist amount.

In addition, when the driver implements a steering operation in the direction away from the reference trajectory, vehicle control device 500 may cancel steering-angle assist control and notify the driver that the driving operation is not a preferable steering operation in the direction away from the reference trajectory.

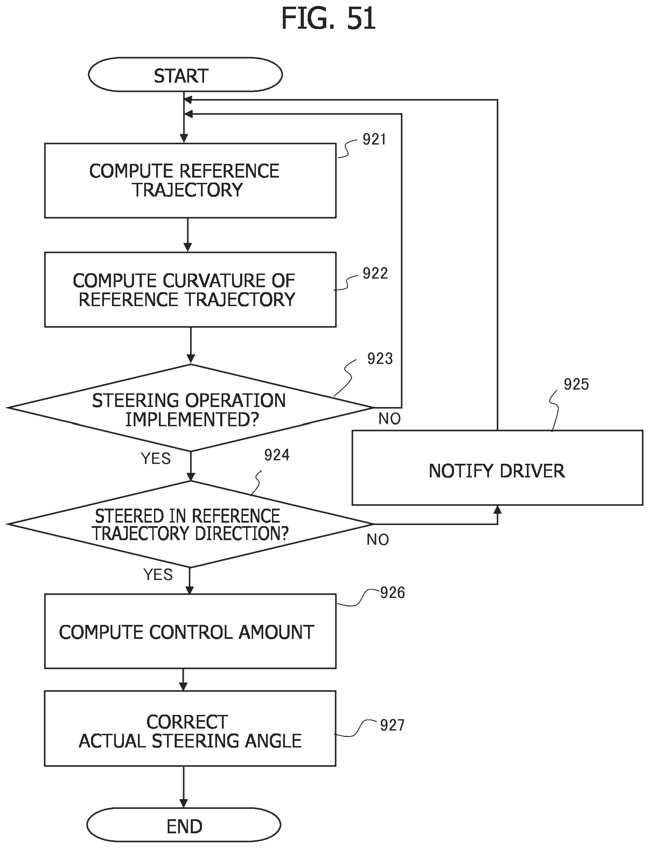

As a derived form of the second steering-angle assist pattern, the flowchart in FIG. 51 illustrates assist control to cancel steering-angle assist control with respect to the steering operation in the direction away from the reference trajectory and notify (warn) the driver.

At Step S921 to Step S923, as in Steps S711 to S713 in the flowchart in FIG. 17, vehicle control device 500 implements the generation of the reference trajectory, the computation of the curvature of the reference trajectory, and the determination as to whether or not there is a steering operation by the driver.

Then, when it is determined at Step S923 that the driver is implementing a steering operation, vehicle control device 500 proceeds to Step S924.

At Step S924, vehicle control device 500 determines whether the direction of the curvature of the reference trajectory and the direction of the steering operation by the driver are the same direction or opposite directions.

Here, in a case in which the direction of the curvature of the reference trajectory and the direction of the steering operation by the driver are the same direction, vehicle control device 500 proceeds to Step S926 and Step S927, and, as in Step S714 and Step S715, causes the steering angle of the steer-by-wire system to reflect an assist amount based on the curvature of the reference trajectory.

On the other hand, in a case in which the direction of the curvature of the reference trajectory and the direction of the steering operation by the driver are opposite directions, that is, in a case in which a steering direction included in physical quantities related to the driving operation is a direction of vehicle 10 away from the reference trajectory included in the reference information, vehicle control device 500 proceeds to Step S925, and outputs, to a notifying section included in vehicle 10, a notification command for notifying the driver of the steering operation, the direction of which is opposite to the direction of the curvature of the reference trajectory.

As the notifying section, a head-up display (HUD), a liquid crystal screen, a lamp, a buzzer, or the like is used.

In addition, in vehicle 10 including the steer-by-wire system, it is possible to impart vibration to the steering wheel using the steering reaction force actuator to thereby enable notification of the driver, and in this case, the steer-by-wire system, specifically the combination of the steering reaction force actuator and the steering wheel, functions as a notifying section.

In addition, vehicle control device 500 may actuate a plurality of notifying sections in parallel to thereby notify the driver.

The driver notified by the notifying section can recognize that the driver is implementing a steering operation in a direction away from the reference trajectory, and the steering operation by the driver can be guided to a direction to enhance the comfort and safety of the vehicle, that is, to a direction along the reference trajectory.

In addition, in vehicle 10 including the steer-by-wire system, vehicle control device 500 (assist section 505) may determine an assist amount as a control amount of the steering reaction force to be applied to the steering wheel.

That is, vehicle control device 500 may adjust the steering reaction force to be applied to the steering wheel to thereby cause travel of vehicle 10 according to operations by the driver to approach the reference information acquired on the basis of the reference trajectory.

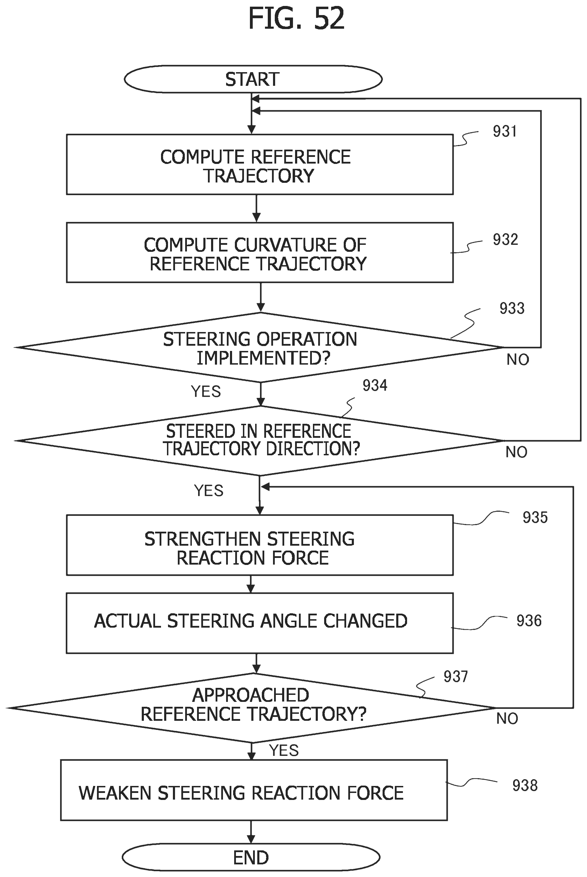

The flowchart in FIG. 52 illustrates an example of assist control targeting the steering reaction force to be applied to the steering wheel in vehicle 10 including the steer-by-wire system.

Note that the control process illustrated in the flowchart in FIG. 52 is based on the second steering-angle assist pattern, and instead of directly adjusting the steering angle, vehicle control device 500 assists a steering wheel operation by the driver in a direction that causes the travel trajectory of vehicle 10 to approach the reference trajectory through adjustment of the steering reaction force to be applied to the steering wheel.

At Step S931 to Step S933, as in Steps S711 to S713 in the flowchart in FIG. 17, vehicle control device 500 implements the generation of the reference trajectory, the computation of the curvature of the reference trajectory, and the determination as to whether or not there is a steering operation by the driver.

Then, at Step S934, vehicle control device 500 determines whether the direction of the curvature of the reference trajectory and the direction of the steering operation by the driver are the same direction or opposite directions.

Here, in a case in which the direction of the curvature of the reference trajectory and the direction of the steering operation by the driver are opposite directions, vehicle control device 500 returns to Step S931 to thereby cancel steering-angle assist control.

On the other hand, in a case in which the direction of the curvature of the reference trajectory and the direction of the steering operation by the driver are the same direction, vehicle control device 500 proceeds to Step S935 and the subsequent steps and implements steering-angle assist control.

At Step S935, vehicle control device 500 strengthens the steering reaction force to be applied to the steering wheel to be greater than a normal value and makes it difficult for the driver to perform a rotational operation of the steering wheel.

That is, vehicle control device 500 determines an assist amount as a control amount of the steering reaction force to be applied to the steering wheel.

Then, at Step S936, vehicle control device 500 changes the actual steering angle depending on a steering operation of the steering wheel.

Next, at Step S937, vehicle control device 500 determines whether or not the trajectory resulting from a driving operation by the driver is approaching the reference trajectory.

In a case in which the trajectory resulting from the driving operation by the driver is not approaching the reference trajectory, vehicle control device 500 returns to Step S935 and continues a process of strengthening the steering reaction force to be applied to the steering wheel.

On the other hand, in a case in which the trajectory resulting from the driving operation by the driver is approaching the reference trajectory, vehicle control device 500 proceeds to Step S938 and weakens the steering reaction force to be applied to the steering wheel to be the normal value.

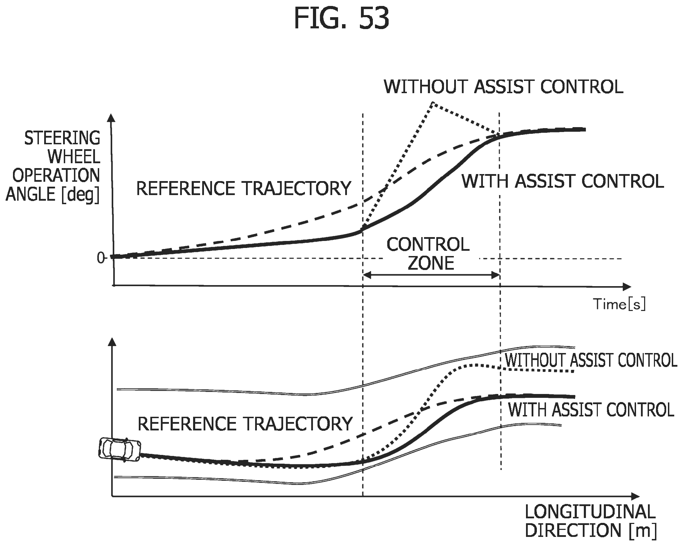

FIG. 53 is a drawing for explaining the operation of assist control to control the steering reaction force to be applied to the steering wheel illustrated in FIG. 52. The upper portion illustrates the operation angle (steering wheel angle) of the steering wheel, and the lower portion illustrates the travel trajectory of vehicle 10 in relation to the operation angle of the steering wheel.

When the skill level of the driver is low in travel on a curved road, the start timing of a steering operation by the driver tends to be late, causing the driver to hurriedly perform a significant steering operation. As a result, the actual steering angle overshoots, and counter-steering is performed.

Then, in a case in which such a steering operation is implemented, vehicle 10 travels along a trajectory to abruptly cut in from the outer side to the inner side of the curve, and the comfort and safety of vehicle 10 deteriorate.

In contrast, when the steering reaction force to be applied to the steering wheel is strengthened (increased) as assist control, it is made difficult for the driver to perform an abrupt rotational operation of the steering wheel to thereby inhibit an excessive steering operation.

As a result, overshooting of the reference trajectory by the travel trajectory of vehicle 10 is inhibited, the convergence toward the reference trajectory is facilitated, and the comfort and safety of vehicle 10 are enhanced.

Individual technical ideas explained in the embodiment described above may be used in combination as appropriate as long as no conflict occurs.

In addition, whereas the content of the present invention has been explained specifically with reference to a preferred embodiment, it is apparent to those skilled in the art that the present invention can take various modified forms on the basis of the basic technical concept and teachings of the present invention.

For example, a microcomputer having the functions of trajectory generating section 503 and a microcomputer having the functions of assist section 505 may be separate microcomputers.

In addition, as steering-angle assist control, vehicle control device 500 may control the steering reaction force to be applied to the steering wheel while directly adjusting the steering angle.

REFERENCE SYMBOL LIST

10      Vehicle
100     Vehicle traveling system
200     External-environment recognizing section
300     Vehicle motion amount detecting section
400     Driving operation amount detecting section
500     Vehicle control device
600     Travel actuator

**Claims**

1. A vehicle control device comprising:

   a vehicle motion amount acquiring section that acquires a physical quantity related to motion of a vehicle;
   a driving operation amount acquiring section that acquires a physical quantity related to a driving operation of the vehicle by a driver;
   a trajectory generating section that generates a reference trajectory on a basis of a travelable area ahead of the vehicle and a predetermined constraint in travel of the vehicle through the travelable area; and
   an assist section that determines an assist amount for causing travel of the vehicle according to an operation by the driver to approach reference information acquired on a basis of the reference trajectory, on a basis of the physical quantity related to the motion of the vehicle, the physical quantity related to the driving operation of the vehicle, and the reference information and outputs the assist amount to a travel actuator of the vehicle.

2. The vehicle control device according to claim 1, wherein
   the assist section

   determines the assist amount for increasing a steering amount of a steered road wheel of the vehicle in a case in which the reference trajectory included in the reference information is on the same side as a steering direction included in the physical quantity related to the driving operation of the vehicle and is located ahead in the steering direction,
   determines the assist amount for reducing or maintaining the steering amount in a case in which the reference trajectory included in the reference information is on the same side as the steering direction included in the physical quantity related to the driving operation of the vehicle and is located behind in the steering direction, and
   makes the assist amount zero in a case in which the reference trajectory included in the reference information is on a side opposite to the steering direction included in the physical quantity related to the driving operation of the vehicle, and priority is given to the driving operation by the driver.

3. The vehicle control device according to claim 1, wherein
   the assist section determines a steering amount of a steered road wheel or a vehicle speed of the vehicle as the assist amount on a basis of curvature of the reference trajectory included in the reference information.

4. The vehicle control device according to claim 1, wherein
   the assist section determines a steering speed of a steered road wheel or a vehicle speed of the vehicle as the assist amount on a basis of a derivative value of curvature of the reference trajectory included in the reference information.

5. The vehicle control device according to claim 1, wherein
   the assist section determines the assist amount related to a steering amount of a steered road wheel of the vehicle such that an intervention timing for the steering amount differs depending on whether the vehicle is traveling on an inner side of a turn or an outer side of a turn with respect to the reference trajectory included in the reference information.

6. The vehicle control device according to claim 1, wherein
   the assist section makes the assist amount zero in a case in which tire force of the vehicle becomes saturated when the vehicle is caused to approach the reference trajectory included in the reference information.

7. The vehicle control device according to claim 1, wherein
the assist section causes the vehicle to approach the reference trajectory included in the reference information such that the vehicle travels on an inner side of the travelable area.

8. The vehicle control device according to claim 1, wherein
the assist section determines the assist amount on a basis of a nearest point of the reference trajectory included in the reference information with respect to the vehicle or a predetermined point on the reference trajectory located ahead in an advancing direction of the vehicle.

9. The vehicle control device according to claim 1, wherein
the assist section determines the assist amount for causing a predicted travel trajectory of the vehicle predicted on a basis of the physical quantity related to the motion of the vehicle, the physical quantity related to the driving operation of the vehicle, and a past travel trajectory of the vehicle to approach the reference trajectory included in the reference information.

10. The vehicle control device according to claim 1, comprising:

   a vehicle travel trajectory predicting section that predicts a predicted travel trajectory of the vehicle on a basis of the physical quantity related to the motion of the vehicle, the physical quantity related to the driving operation of the vehicle, and a past travel trajectory of the vehicle, wherein
   the trajectory generating section generates the reference trajectory taking the predicted travel trajectory into account.

11. The vehicle control device according to claim 1, comprising:

   a vehicle motion state predicting section that predicts a motion state of the vehicle on a basis of the physical quantity related to the motion of the vehicle, the physical quantity related to the driving operation of the vehicle, and a past travel trajectory of the vehicle, wherein
   the trajectory generating section generates the reference trajectory taking the predicted motion state of the vehicle into account.

12. The vehicle control device according to claim 1, wherein
the assist section outputs, to a notifying section of the vehicle, a command for notifying the driver of the driving operation in a case in which a steering direction included in the physical quantity related to the driving operation of the vehicle is a direction in which the vehicle moves away from the reference trajectory included in the reference information.

13. The vehicle control device according to claim 1, wherein
as the travel actuator, the vehicle has a steer-by-wire system that steers a steered road wheel of the vehicle that is mechanically disconnected from a steering wheel.

14. The vehicle control device according to claim 13, wherein
the assist section determines the assist amount for steering the steered road wheel without rotating the steering wheel.

15. The vehicle control device according to claim 13, wherein
the assist section determines the assist amount as a control amount of steering reaction force applied to the steering wheel.

# FIG. 1

EP 4 775 465 A1

# FIG. 2

VEHICLE MOTION AMOUNT ACQUIRING SECTION — 501

DRIVING OPERATION AMOUNT ACQUIRING SECTION — 502

ASSIST SECTION — 505

STEERING DEVICE — 610

DRIVING DEVICE — 620

BRAKING DEVICE — 630

TRAJECTORY GENERATING SECTION — 503

INDICATOR GENERATING SECTION — 504

CONSTRAINTS

TRAVELABLE AREA

EP 4 775 465 A1

# FIG. 3

EP 4 775 465 A1

# FIG. 4

TRAJECTORY PROCESSING

TRAVELABLE AREA

REFERENCE TRAJECTORY

CANDIDATE OF REFERENCE TRAJECTORY

OB

10

180

# FIG. 5

$y$

$\dot{y}[5]$

$y[5]$

$u[4]$

$u[3]$

$\dot{x}[5]$

$u[2]$

$x[5]$

$u[0]$

$u[1]$

$x[4]$

$x[3]$

$x[2]$

$x$

$x[0]$

$x[1]$

$x[5]$

DIFFERENCE EQUATION EXPRESSION OF TRAJECTORY POINTS

# FIG. 6

10

TRAVEL TRAJECTORY

REFERENCE TRAJECTORY

NEAREST POINT

# FIG. 7

REFERENCE TRAJECTORY

$L_p = T_p V$

# FIG. 8

START

COMPUTE REFERENCE TRAJECTORY — 701

COMPUTE PREDICTED TRAJECTORY — 702

STEERING OPERATION IMPLEMENTED? — 703

NO

YES

COMPUTE DIFFERENCE BETWEEN TRAJECTORIES — 704

SBW

EPS

CORRECT ACTUAL STEERING ANGLE

CORRECT STEERING ASSIST FORCE

END — 705

END — 706

# FIG. 9

# FIG. 10

# FIG. 11

## FIG. 12

WITHOUT ASSIST CONTROL

WITH ASSIST CONTROL

REFERENCE TRAJECTORY

## FIG. 13

LATERAL ACCELERATION [m/s^2]

WITHOUT ASSIST CONTROL

WITH ASSIST CONTROL

Time[s]

## FIG. 14

TRAVELABLE AREA

WITHOUT ASSIST CONTROL

WITH ASSIST CONTROL

REFERENCE TRAJECTORY

## FIG. 15

LATERAL ACCELERATION [m/s^2]

WITH ASSIST CONTROL

WITHOUT ASSIST CONTROL

0

Time[s]

# FIG. 16

REFERENCE TRAJECTORY

TRAJECTORY WITH ASSIST CONTROL

PREDICTED TRAVEL TRAJECTORY

# FIG. 17

START

COMPUTE REFERENCE TRAJECTORY — 711

COMPUTE CURVATURE OF REFERENCE TRAJECTORY — 712

STEERING OPERATION IMPLEMENTED? — 713

NO

YES

COMPUTE CONTROL AMOUNT — 714

SBW

EPS

CORRECT ACTUAL STEERING ANGLE

CORRECT STEERING ASSIST FORCE

END — 715

END — 716

# FIG. 18

# FIG. 19

LATERAL
DIRECTION [m]

ROAD BOUNDARY LINE

WITHOUT
ASSIST CONTROL

REFERENCE TRAJECTORY

ROAD BOUNDARY LINE

WITH ASSIST CONTROL

LONGITUDINAL
DIRECTION [m]

CURVATURE
[1/m]
STEERING ANGLE
[deg or rad]

REFERENCE
TRAJECTORY

WITH ASSIST CONTROL

LONGITUDINAL
DIRECTION [m]

WITHOUT ASSIST CONTROL

ACTUAL
STEERING
ANGLE
(TIRE ANGLE)
[deg]

WITH ASSIST CONTROL

LONGITUDINAL
DIRECTION [m]

WITHOUT ASSIST CONTROL

STEERING
OPERATION
TORQUE [N]

WITHOUT ASSIST CONTROL
(ONLY NORMAL ASSIST)

LONGITUDINAL
DIRECTION [m]

WITH ASSIST CONTROL

# FIG. 20

```
                    ┌─────────────┐
                    │    START    │
                    └──────┬──────┘
                           │ ◄─────────────────────────┐
                    ┌──────▼──────────┐                 │
                    │ COMPUTE REFERENCE│   721          │
                    │    TRAJECTORY    │                │
                    └──────┬──────────┘                 │
                    ┌──────▼──────────┐                 │
                    │COMPUTE CURVATURE OF│  722         │
                    │ REFERENCE TRAJECTORY│             │
                    └──────┬──────────┘                 │
                    ┌──────▼──────────┐                 │
                    │    COMPUTE      │   723          │
                    │CURVATURE DERIVATIVE│              │
                    └──────┬──────────┘                 │
                           │            724             │
                    ┌──────▼──────────┐                 │
                   ╱ STEERING OPERATION ╲    NO         │
                  ⟨   IMPLEMENTED?      ⟩───────────────┘
                    ╲                  ╱
                           │ YES
                    ┌──────▼────────────────┐  725
                    │ COMPUTE CONTROL AMOUNT │
                    └───┬──────────────┬─────┘
                   SBW  │              │  EPS
            ┌───────────▼──┐    ┌──────▼──────────┐
            │   CORRECT    │    │    CORRECT      │
            │ACTUAL STEERING│   │STEERING ASSIST  │
            │    ANGLE     │    │    FORCE        │
            └───────┬──────┘    └──────┬──────────┘
                    │      726         │       727
              ┌─────▼─────┐      ┌─────▼─────┐
              │    END    │      │    END    │
              └───────────┘      └───────────┘
```

# FIG.21

## FIG. 22

WITH ASSIST CONTROL

WITHOUT ASSIST CONTROL

REFERENCE TRAJECTORY

## FIG. 23

STEERING
ANGLE
[deg]

WITH ASSIST CONTROL

0

WITHOUT
ASSIST CONTROL

Time[s]

# FIG. 24

START

COMPUTE REFERENCE TRAJECTORY — 731

COMPUTE CURVATURE OF REFERENCE TRAJECTORY — 732

COMPUTE PREDICTED TRAVEL TRAJECTORY — 733

COMPUTE CURVATURE OF PREDICTED TRAVEL TRAJECTORY — 734

STEERING OPERATION IMPLEMENTED? — 735

NO

YES

COMPUTE CONTROL AMOUNT — 736

SBW

EPS

CORRECT ACTUAL STEERING ANGLE

CORRECT STEERING ASSIST FORCE

END — 737

END — 738

# FIG. 25

TRAVEL TRAJECTORY A
REFERENCE TRAJECTORY
TRAVEL TRAJECTORY B

# FIG. 26

<<TRAVEL ON OUTER SIDE OF REFERENCE TRAJECTORY>>

REFERENCE
TRAJECTORY

TRAVEL
TRAJECTORY A

ACTUAL
STEERING
ANGLE
(TIRE ANGLE)
[deg]

Time[s]

# FIG. 27

<<TRAVEL ON INNER SIDE OF REFERENCE TRAJECTORY>>

TRAVEL
TRAJECTORY B

REFERENCE
TRAJECTORY

ACTUAL
STEERING
ANGLE
(TIRE ANGLE)
[deg]

Time[s]

# FIG. 28

START

COMPUTE REFERENCE TRAJECTORY — 741

COMPUTE CURVATURE OF REFERENCE TRAJECTORY — 742

COMPUTE CURVATURE DERIVATIVE OF REFERENCE TRAJECTORY — 743

COMPUTE PREDICTED TRAVEL TRAJECTORY — 744

COMPUTE CURVATURE OF PREDICTED TRAVEL TRAJECTORY — 745

COMPUTE CURVATURE DERIVATIVE OF PREDICTED TRAVEL TRAJECTORY — 746

STEERING OPERATION IMPLEMENTED? — 747

NO

YES

COMPUTE CONTROL AMOUNT — 748

SBW

EPS

CORRECT ACTUAL STEERING ANGLE

CORRECT STEERING ASSIST FORCE

END — 749

END — 750

# FIG. 29

START

COMPUTE REFERENCE
TRAJECTORY ⟋761

COMPUTE PREDICTED
TRAJECTORY ⟋762

⟋763
STEERING OPERATION
IMPLEMENTED?

NO

YES

⟋764
ARE TRAJECTORY DIRECTIONS
THE SAME?

NO

YES

⟋765
COMPUTE DIFFERENCE
BETWEEN TRAJECTORIES

SBW

EPS

CORRECT
ACTUAL STEERING ANGLE

CORRECT
STEERING ASSIST FORCE

⟋766

⟋767

END

END

# FIG. 30

START

COMPUTE REFERENCE
TRAJECTORY — 771

COMPUTE PREDICTED
TRAJECTORY — 772

STEERING OPERATION
IMPLEMENTED? — 773
NO

YES

ARE TRAJECTORY DIRECTIONS
THE SAME? — 774
NO

YES

OBSTACLE? — 775
NO

YES

COMPUTE DIFFERENCE
BETWEEN TRAJECTORIES — 776

SBW — EPS

CORRECT
ACTUAL STEERING ANGLE — 777

CORRECT
STEERING ASSIST FORCE — 778

END

END

## FIG. 31

DRIVER-PRIORITY MODE

REFERENCE TRAJECTORY

WITHOUT ASSIST CONTROL

## FIG. 32

SAFETY-PRIORITY MODE

WITH ASSIST CONTROL

REFERENCE TRAJECTORY

OBSTACLE

WITHOUT ASSIST CONTROL

# FIG. 33

START

COMPUTE REFERENCE TRAJECTORY — 781

COMPUTE PREDICTED TRAJECTORY — 782

STEERING OPERATION IMPLEMENTED? — 783
NO

YES

COMPUTE DIFFERENCE BETWEEN TRAJECTORIES — 784

785 — SBW
CORRECT ACTUAL STEERING ANGLE

EPS — 786
CORRECT STEERING ASSIST FORCE

GRIP LIMIT? — 787
NO                NO
YES

788 — SBW
CANCEL CORRECTION OF ACTUAL STEERING ANGLE

EPS — 789
CANCEL CORRECTION OF STEERING ASSIST FORCE

END

END

## FIG. 34

REFERENCE TRAJECTORY

## FIG. 35

BRAKE FORCE

TIRE FORCE BECOMES
SATURATED, AND TIRES SLIP

LEFT TURNING
FORCE

RIGHT TURNING FORCE

TIRE FORCE AT WHICH
ASSIST CONTROL IS CANCELED

DRIVE FORCE

# FIG. 36

```
                    START

                      ↓
          ┌──────────────────────┐  ⌇791
          │   COMPUTE REFERENCE  │
          │      TRAJECTORY      │
          └──────────────────────┘
                      ↓
          ┌──────────────────────┐  ⌇792
          │  COMPUTE CURVATURE OF│
          │  REFERENCE TRAJECTORY│
          └──────────────────────┘
                      ↓
               ◇ 793
          STEERING OPERATION
            IMPLEMENTED?          NO
                 YES
                      ↓
               ◇ 794
          ARE TRAJECTORY DIRECTIONS   NO
               THE SAME?                    ◇ 795
                 YES        YES        DEVIATE?     NO

                      ↓
          ┌──────────────────────┐
          │ COMPUTE CONTROL AMOUNT│   796
          └──────────────────────┘
               SBW        EPS
          ┌──────────┐  ┌──────────┐
          │ CORRECT  │  │ CORRECT  │
          │ ACTUAL   │  │ STEERING │
          │ STEERING │  │ ASSIST   │
          │ ANGLE    │  │ FORCE    │
          └──────────┘  └──────────┘
              797           798
             END            END
```

## FIG. 37

REFERENCE TRAJECTORY

WITH ASSIST CONTROL

PREDICTED TRAVEL TRAJECTORY

# FIG. 38

START

COMPUTE REFERENCE TRAJECTORY — 801

COMPUTE CURVATURE OF REFERENCE TRAJECTORY — 802

COMPUTE TARGET SPEED — 803

COMPUTE TARGET LONGITUDINAL ACCELERATION — 804

BRAKE OPERATION? — 805

NO

YES — 806

COMPUTE CONTROL AMOUNT

CORRECT BRAKE PRESSURE, ETC.

END — 807

ACCELERATOR OPERATION? — 808

NO

YES — 809

COMPUTE CONTROL AMOUNT

CORRECT ACCELERATOR OPENING, ETC.

END — 810

## FIG. 39

REFERENCE TRAJECTORY

## FIG. 40

STEERING WHEEL OPERATION ANGLE [deg]

Time[s]

VEHICLE SPEED [km/h]

Time[s]

# FIG. 41

WITHOUT ASSIST CONTROL

WITH ASSIST CONTROL

REFERENCE TRAJECTORY

# FIG. 42

WITH ASSIST CONTROL

ACTUAL
STEERING
ANGLE
(TIRE ANGLE)
[deg]

WITHOUT ASSIST CONTROL

Time[s]

VEHICLE SPEED
[km/h]

Time[s]

LATERAL
ACCELERATION
[m/s^2]

Time[s]

# FIG. 43

WITH ASSIST CONTROL

REFERENCE TRAJECTORY

WITHOUT ASSIST CONTROL

# FIG. 44

LATERAL
ACCELERATION
[m/s^2]

WITHOUT ASSIST CONTROL

0

WITH ASSIST CONTROL

Time[s]

VEHICLE SPEED
[km/h]

Time[s]

# FIG. 45

START

COMPUTE REFERENCE TRAJECTORY — 821

COMPUTE CURVATURE OF REFERENCE TRAJECTORY — 822

COMPUTE CURVATURE DERIVATIVE OF REFERENCE TRAJECTORY — 823

COMPUTE TARGET SPEED — 824

COMPUTE TARGET LONGITUDINAL ACCELERATION — 825

BRAKE OPERATION? — 826
NO
YES — 827

COMPUTE CONTROL AMOUNT

CORRECT BRAKE PRESSURE, ETC.

END — 828

ACCELERATOR OPERATION? — 829
NO
YES — 830

COMPUTE CONTROL AMOUNT

CORRECT ACCELERATOR OPENING, ETC.

END — 831

# FIG. 46

ALTHOUGH STEERING IS STARTED SOMEWHAT LATE, ASSIST IS PERFORMED TO CAUSE VEHICLE TO TRAVEL ALONG TRAJECTORY BY STEERING FAST

STEERING WHEEL OPERATION ANGLE [deg]

STEERING ANGLE DURING TRAVEL ALONG REFERENCE TRAJECTORY

ALTHOUGH STEERING IS STARTED SOMEWHAT EARLIER, ASSIST IS PERFORMED TO CAUSE VEHICLE TO TRAVEL ALONG TRAJECTORY BY STEERING SLOWLY

Time[s]

VEHICLE SPEED [km/h]

ADJUST DECELERATION AMOUNT DEPENDING ON TIMINGS OF STEERING ANGULAR SPEED AND STEERING ANGLE

Time[s]

# FIG. 47

```
                        START

        COMPUTE REFERENCE
        TRAJECTORY                        841

        COMPUTE CURVATURE OF
        REFERENCE TRAJECTORY              842

        COMPUTE TARGET SPEED             843

        COMPUTE PREDICTED
        TRAVEL TRAJECTORY                844

        COMPUTE CURVATURE OF
        PREDICTED TRAVEL TRAJECTORY      845

        COMPUTE PREDICTED SPEED          846
```

847 BRAKE OPERATION?   850 ACCELERATOR OPERATION?

NO                                                    NO

848 YES                                  851 YES

COMPUTE CONTROL AMOUNT       COMPUTE CONTROL AMOUNT

CORRECT BRAKE PRESSURE, ETC.    CORRECT ACCELERATOR OPENING, ETC.

849 END                                  852 END

# FIG. 48

START

COMPUTE REFERENCE TRAJECTORY — 861

COMPUTE CURVATURE OF REFERENCE TRAJECTORY — 862

COMPUTE TARGET SPEED — 863

COMPUTE TARGET LONGITUDINAL ACCELERATION — 864

COMPUTE TARGET LONGITUDINAL JERK — 865

BRAKE OPERATION? — 866
NO
YES — 867

ACCELERATOR OPERATION? — 869
NO
YES — 870

COMPUTE CONTROL AMOUNT

COMPUTE CONTROL AMOUNT

CORRECT BRAKE PRESSURE, ETC. — 868

CORRECT ACCELERATOR OPENING, ETC. — 871

END

END

# FIG. 49

START

COMPUTE REFERENCE TRAJECTORY — 881

COMPUTE CURVATURE OF REFERENCE TRAJECTORY — 882

COMPUTE TARGET SPEED — 883

COMPUTE TARGET LONGITUDINAL ACCELERATION — 884

COMPUTE PREDICTED TRAVEL TRAJECTORY — 885

COMPUTE CURVATURE OF PREDICTED TRAVEL TRAJECTORY — 886

COMPUTE PREDICTED SPEED — 887

COMPUTE PREDICTED LONGITUDINAL ACCELERATION — 888

BRAKE OPERATION? — 889    NO

YES — 890

COMPUTE CONTROL AMOUNT

CORRECT BRAKE PRESSURE, ETC.

END — 891

ACCELERATOR OPERATION? — 892    NO

YES — 893

COMPUTE CONTROL AMOUNT

CORRECT ACCELERATOR OPENING, ETC.

END — 894

# FIG. 50

START

COMPUTE REFERENCE TRAJECTORY — 901

COMPUTE CURVATURE OF REFERENCE TRAJECTORY — 902

COMPUTE TARGET SPEED — 903

COMPUTE TARGET LONGITUDINAL ACCELERATION — 904

COMPUTE TARGET LONGITUDINAL JERK — 905

COMPUTE PREDICTED TRAVEL TRAJECTORY — 906

COMPUTE CURVATURE OF PREDICTED TRAVEL TRAJECTORY — 907

COMPUTE PREDICTED SPEED — 908

COMPUTE PREDICTED LONGITUDINAL ACCELERATION — 909

COMPUTE PREDICTED LONGITUDINAL JERK — 910

BRAKE OPERATION? — 911    NO

YES — 912

COMPUTE CONTROL AMOUNT

CORRECT BRAKE PRESSURE, ETC.

END — 913

ACCELERATOR OPERATION? — 914    NO

YES — 915

COMPUTE CONTROL AMOUNT

CORRECT ACCELERATOR OPENING, ETC.

END — 916

# FIG. 51

START

COMPUTE REFERENCE TRAJECTORY — 921

COMPUTE CURVATURE OF REFERENCE TRAJECTORY — 922

STEERING OPERATION IMPLEMENTED? — 923

NO

YES

NOTIFY DRIVER — 925

STEERED IN REFERENCE TRAJECTORY DIRECTION? — 924

NO

YES

COMPUTE CONTROL AMOUNT — 926

CORRECT ACTUAL STEERING ANGLE — 927

END

# FIG. 52

START

COMPUTE REFERENCE
TRAJECTORY — 931

COMPUTE CURVATURE OF
REFERENCE TRAJECTORY — 932

STEERING OPERATION
IMPLEMENTED? — 933
NO

YES

934
STEERED IN REFERENCE
TRAJECTORY DIRECTION?
NO

YES

STRENGTHEN STEERING
REACTION FORCE — 935

ACTUAL STEERING ANGLE CHANGED — 936

937
APPROACHED
REFERENCE TRAJECTORY?
NO

YES

WEAKEN STEERING REACTION FORCE — 938

END

# FIG. 53

WITHOUT ASSIST CONTROL

STEERING
WHEEL
OPERATION
ANGLE [deg]

REFERENCE TRAJECTORY

WITH ASSIST CONTROL

0

CONTROL
ZONE

Time[s]

WITHOUT ASSIST CONTROL

REFERENCE TRAJECTORY

WITH ASSIST CONTROL

LONGITUDINAL
DIRECTION [m]

## INTERNATIONAL SEARCH REPORT

| International application No. |
| --- |
| **PCT/JP2024/028372** |

**A. CLASSIFICATION OF SUBJECT MATTER**

*B60W 30/10*(2006.01)i; *B60W 30/02*(2012.01)i; *B60W 30/08*(2012.01)i; *B60W 30/095*(2012.01)i; *B62D 6/00*(2006.01)i; *G08G 1/16*(2006.01)i
FI: B60W30/10; B60W30/02; B60W30/08; B60W30/095; B62D6/00; G08G1/16 C

According to International Patent Classification (IPC) or to both national classification and IPC

**B. FIELDS SEARCHED**

Minimum documentation searched (classification system followed by classification symbols)

B60W30/00-60/00; G08G 1/00-99/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2018-203108 A (MAZDA MOTOR CORPORATION) 27 December 2018 (2018-12-27) paragraphs [0014]-[0106], fig. 1-7 | 1, 3, 7, 12-13 |
| A | paragraphs [0014]-[0106], fig. 1-7 | 2, 4-6, 8-11, 14-15 |
| A | CN 113291286 A (DONGFENG MOTOR GROUP CO., LTD.) 24 August 2021 (2021-08-24) paragraphs [0045]-[0093], fig. 1 | 1-15 |
| A | JP 2016-139163 A (HITACHI, LTD.) 04 August 2016 (2016-08-04) paragraphs [0010]-[0046], fig. 1-13 | 1-15 |

☐ Further documents are listed in the continuation of Box C.　　☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **08 October 2024** | **22 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

| | | | International application No.<br>**PCT/JP2024/028372** | |
|---|---|---|---|---|
| Patent document<br>cited in search report | Publication date<br>(day/month/year) | Patent family member(s) | | Publication date<br>(day/month/year) |
| JP 2018-203108 A | 27 December 2018 | (Family: none) | | |
| CN 113291286 A | 24 August 2021 | (Family: none) | | |
| JP 2016-139163 A | 04 August 2016 | EP 3048021 A1<br>paragraphs [0009]-[0045], fig.<br>1-13 | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011080830 A